# EUROPÄISCHE PATENTSCHRIFT

(11) **EP 3 257 644 B1**
(45) Veröffentlichungstag und Bekanntmachung des Hinweises auf die Patenterteilung: **29.08.2018**
(21) Anmeldenummer: 17000588.8
(22) Anmeldetag: 07.04.2017
(51) Int. Cl.: B29B 17/00, B29C 47/00, B29C 47/42, C08J 11/04, B29K 21/00, B29K 105/26, B29K 105/24

(54) **VERFAHREN FÜR DAS DEVULKANISIEREN VON ALTGUMMI**
METHOD FOR THE DEVULCANIZATION OF SCRAP RUBBER
PROCÉDÉ D'AMORÇAGE POUR LA DÉVULCANISATION DE CAOUTCHOUC USAGÉ

(30) Priorität: 16.06.2016 DE 102016007290
(43) Veröffentlichungstag der Anmeldung: 20.12.2017
(73) Patentinhaber: Entex Rust & Mitschke GmbH, 44805 Bochum (DE)
(72) Erfinder: Rust, Harald, 44805 Bochum (DE)
(74) Vertreter: Kaewert, Klaus

(56) Entgegenhaltungen:
- WO-A1-2011/091966
- WO-A1-2014/056553
- MICHAEL W BATTON ET AL: "An introduction of the planetary roller extruder and areas of applications rubber devulcanization", ANTEC 2015 - PROCEEDINGS OF THE TECHNICAL CONFERENCE & EXHIBITION, ORLANDO, FLORIDA, USA MARCH 23-25,, 1. März 2015 (2015-03-01), XP009191170,
- LIMPER A ET AL: "DER PLANETWALZENEXTRUDER - EIN VIELSEITIGES AUFBEREITUNGSAGGREGAT", KUNSTSTOFFE, CARL HANSER VERLAG, MUNCHEN, DE, Bd. 80, Nr. 1, 1. Januar 1990 (1990-01-01) , Seiten 26-30, XP000161516, ISSN: 0023-5563

## Beschreibung

Die Erfindung betrifft das Devulkanisieren von Altgummi.
Gummi besteht aus Naturkautschuk und/oder künstlich hergestellten Elastomeren, deren Moleküle eine Vernetzung erfahren haben.
Bekannt sind dabei unter anderem Schwefel-Kohlenstoffverbindungen und Schwefel-Schwefel-Verbindungen zwischen den Molekülen. Dabei wird auch von Querverbindungen gesprochen.
Durch das Vernetzen ändern sich die Materialeigeschaften drastisch.
Das betrifft insbesondere die Festigkeit, Elastizität und die Wärmebelastungsfähigkeit.

Überwiegend kommt Gummi in der Fahrzeugindustrie zur Anwendung.
Die Belastbarkeit von Fahrzeugreifen ist legendär.
Je nach Laufkilometer der Reifen ergibt sich ein Verschleißzustand, der sich daran mißt, wie stark das Profil der Reifen abgefahren ist.
Wenn das Profil eine bestimmte Dicke unterschritten hat, muß ein Reifenwechsel vorgenommen werden.
Es fallen Altreifen bzw. Altgummi an.

Es gibt zwar verschiedene Vorschläge zur chemischen Aufbereitung von Altgummi, der Aufwand ist jedoch so hoch, dass bisher davon kaum Gebrauch gemacht wird. Vielmehr wird Altgummi vorzugsweise der Verbrennung zugeführt. Dabei hat sich die Zementindustrie als großer Abnehmer erwiesen. Dort wird der Altgummi in den Drehrohröfen mitverbrannt. Die Zementdrehrohrofen besitzt eine lange Verbrennungsstrecke, so dass unverbrannte Gase nachverbrannt werden. Eine Belastung der Umwelt aus unverbrannten Gasen der Altreifenverbrennung wird damit ausgeschlossen.
Die Zementindustrie verlangt für die Altreifenverbrennung jedoch zumeist einen Entsorgungsbeitrag.
Die Entsorgung der Altreifen wird außerdem nicht mehr als zeitgemäß angesehen.

Deshalb bemüht man sich seit langem um das Recycling von Gummi und Elastomeren.
Dabei werden verschiedene Wege gegangen.
Nach der DE60004885T2 werden zum Devulkanisieren von gehärteten(vernetzten) Elastomeren und Gummi Modifizierungsmittel eingesetzt. Diese Modifizierungsmittel bestehen ganz oder teilweise aus Adipinsäure oder Oxalsäure. Ferner finden Additive Anwendung, die aus Schwefel, Zinkoxid und Stearinsäure bestehen.
In der DE 909041 sind als Modifizierungsmittel Edeleanuextrakte vorgesehen, die aus Erdölverarbeitung gewonnen werden. Dabei handelt es sich zum Beispiel um Kerosin, Nitrobenzol, Furfurol, Phenol, Dichlordiäthylenäther,
Die DE 60008279T2 sieht Aminverbindungen als Devulkanisierungsmittel/Modifizierungsmittel vor.
Die DE60215210T2 sieht aromatisches Öl, naphthenisches Öl oder paraffinisches Öl als Devulkanisierungsmittel vor.
Die 60306089T2 sieht 2-Butanol und Kohlendioxid als Devulkanisierungsmittel vor.
Auch die DE60120804T2 sieht Modifizierungsmittel vor. Allerdings wird das Öl aus dem Recyclat selbst gewonnen.

Die Modifizierungsmittel haben den Nachteil, dass die Modifizierungsmittel ganz oder teilweise in dem Recyclat verbleiben und die Verwendbarkeit des Recyclats ganz stark beschränken.

Es ist auch ein Devulkanisieren ohne chemische Mittel bekannt. Bevorzugt finden dabei Mikrowellen und Ultraschallwellen Anwendung. Mit den Wellen wird eine starke mechanische Belastung des Gummis und der Elastomere erzeugt, mit denen die Molekülketten aufgebrochen werden sollen. Die mechanische Belastung kann durch Anwendung von Wärme bzw. durch hohen Dampfdruck ergänzt werden.
Gleichwohl wird diese Art der Devulkanisation als unzureichend angesehen, vgl. zum Beispiel die DE60120804T2.

Einen anderen Weg zur Devulkanisation bietet die WO2011/091966. Dabei wird vernetztes Altgummi und vernetzte Elastomere, die mechanisch und /oder thermisch zumindest teilweise zerstörbar ist, mittels Extruder devulkanisiert. Insbesondere soll Altgummi und Elastomere, deren Vernetzung auf einer Schwefelverbindung basiert, devulkanisiert werden. Der Schwefel wird durch mechanische und thermische Belastung frei gesetzt und von dem Gummi bzw. den Elastomeren getrennt.
Dabei findet ein Planetwalzenextruder Anwendung.
Früher war schon bekannt, mit Einschneckenextrudern und Doppelschneckenextrudern eine mechanische Belastung zu verursachen, durch die Molekülgerüste zerbrechen können. Ein entsprechender Stand der Technik ist in der DE60120804T2 wie auch in der DE69329245T2, wie auch in der DE69724239T2 beschrieben.

Bei Planetwalzenextrudern wird gegenüber einem Doppelschneckenextruder eine sehr viel geringere mechanische Belastung der Molekülgerüste gesehen.
Auch wenn die Planetwalzenextruder in einigen Druckschriften als mögliche Extrudervariante angesprochen werden, hatten Planetwalzenextruder bis dahin in Produktionsanlagen für das Recycling von Gummi und Elastomeren keinen Eingang gefunden. Der geringen Erwartung an die mechanische Belastung von Molekülketten durch Planetwalzenextruder entspricht, dass einige Hinweise auf die Verwendung von Planetwalzenextrudern für das Recyclieren von Gummi zugleich mit dem Hinweis auf die Zugabe von oben beschriebenen Devulkanisationsmitteln verbunden sind.

Die WO2011/091966 baut gleichwohl mit Dispergierringen eine zum Devulkanisieren ausreichende mechanische Wirkung in Planetwalzenextrudern auf. Mit den Dispergierringen wird der Durchtrittsquerschnitt für das im Extruder behandelte Gummi bzw. Elastomer mehr als durch einen Anlaufring reduziert. Üblicherweise besitzen Anlaufringe einen Innendurchmesser, der in etwa gleich dem Durchmesser ist, welche die Mittelachsen der Planetspindeln bei ihrem Umlauf beschreiben. Diverse Bauarten von Anlaufringen zeigen auch einen größeren Innendurchmesser.

Der Innendurchmesser des vorgesehenen Dispergierringes ist nach der WO2011/091966 vorzugsweise um mindestens 10%, vorzugsweise mindestens 20% und noch weiter bevorzugt mindestens 30% des Maßes der zugehörigen Planetenspindeln kleiner als der vorstehend beschriebene Durchmesser der Bewegungsbahn der Planetspindelmitten bei deren Umlauf.

Die Reduzierung kann dabei so weit gehen, dass die Dispergierringe die Zentralspindel über das notwendige Spiel für die Drehung der Zentralspindel hinaus lediglich mit einem geringen Spalt umgeben.

Die Reduzierung des Durchtrittsquerschnittes kann sogar so weit gehen, dass der Dispergierring in eine Nut der Zentralspindel eingreift.
Dabei kann der Dispergierring zum Beispiel sogar nur noch einen Spalt von wenigen Millimetern, im Extremfall von zum Beispiel einem Millimeter, bis zum Zahngrund für den Durchtritt von Gummi und Elastomeren offen lassen.

Dabei kann es von Vorteil sein, die Nut um ein geringes Maß, zum Beispiel um das Maß von einem Millimeter, über den Zahngrund der Verzahnung an der Zentralspindel hinaus in die Zentralspindel einzuarbeiten. Solche Ringe sind vorzugsweise mehrteilig ausgeführt, so dass die Ringe um die Zentralspindel herum und in der Nut greifend zusammen gesetzt werden können, wenn der Planetwalzenextruder oder Planetwalzenmodul zur Montage des Dispergierringes vorbereitet ist.

Vorzugsweise wird das Verfahren zur Aufbereitung von Altgummi eingesetzt, das von metallischen Verstärkungseinlagen befreit ist. Metallische Verstärkungseinlagen kommen insbesondere an Altreifen vor. Es handelt sich um Stahleinlagen, welche die Fahrzeugreifen in der gewünschten Form halten.
Für die Trennung von Gummi und Metall eignen sich verschiedene Verfahren.
Wahlweise wird das Altgummi stark gekühlt und in dem stark gekühlten Zustand in einer Mühle zerkleinert. In gekühltem Zustand wird die Zerkleinerung leichter, weil die Nachgiebigkeit von Gummi abnimmt. Je kälter das Gummi ist, desto leichter wird die Zerkleinerung.

Nach der WO2011/091966 werden Gummi und Elastomere als Schnitzel in den Extruder eingesetzt. Der mittlere Schnitzeldurchmesser beträgt vorzugsweise 5 bis 40mm, nach weiter bevorzugt 15 bis 30mm.

Im Planetwalzenextruder lässt sich die Temperatur des Behandlungsgutes sehr gut einstellen, weil das Behandlungsgut bzw. Gummi und Elastomere großflächig und dünnschichtig ausgewalzt werden. Dadurch wirkt der Planetwalzenextruder als großflächiger Wärmetauscher. Einschneckenextruder und Doppelschneckenextruder mit vergleichbarer Baugröße besitzen eine vergleichsweise kleine Wärmetauscherfläche.

Die Planetwalzenextruder besitzen eine mittig angeordnete, angetriebene Zentralspindel. Die Zentralspindel ist außen üblicherweise mit einer Evolventenverzahnung versehen. Es gibt auch andere Verzahnungsarten. Die Evolventenverzahnung besitzt üblicherweise eine 45Grad-Schrägung der Zähne. Es gibt auch unterschiedliche Zahngrößen. Dabei wird nach Zahnmodulen unterschieden.

Die Zentralspindel wird von einem Gehäuse umgeben, das eine Innenverzahnung besitzt. Die Innenverzahnung hat den gleichen Zahnmodul wie die Außenverzahnung an der Zentralspindel.
Zwischen dem Gehäuse und der Zentralspindel sind mehrere Planetenspindel gleichmäßig am Umfang der Zentralspindel verteilt angeordnet. Die Planetspindeln besitzen eine Außenverzahnung mit gleichem Modul wie die Zentralspindel und die Gehäuseverzahnung. Die Planetspindeln kämmen mit der Zentralspindel und der Innenverzahnung des Gehäuses.

Die umlaufenden Planetspindeln gleiten in Förderrichtung vorn an einem Gleitring bzw. Anlaufring, so dass deren Umlaufbahn in axialer Richtung bestimmt ist. Wegen der weiteren Einzelheiten üblicher Planetwalzenextruder wird zum Beispiel auf folgende Druckschriften Bezug genommen:
DE 102009019846, DE 102009013839, DE102008063036, DE 102008018686, DE 102007058174, DE102007050466, DE 102007041486, DE 102007040645.

Das Einsatzgut wird im Planetwalzenextruder zwischen den miteinander kämmenden Zähnen dünnschichtig ausgewalzt. Dadurch entsteht eine starke Knetwirkung auf das Altgummi. Durch die Knetwirkung wird Wärme in das Altgummi getragen. Die entstehende Wärme wird nach Bedarf zur Aufwärmung des Einsatzmaterials genutzt oder durch Kühlung aus dem Extruder ausgetragen.

Die Knetwirkung kann durch unterschiedliche Zahl und/oder unterschiedliche Ausbildung der Planetspindeln beeinflußt werden.
Die Zahl der Planetspindeln beträgt vorzugsweise mindestens 5, vorzugsweise mindestens 6. Je größer der Durchmesser der Zentralspindel ist, desto mehr Planetspindeln sind üblicherweise in einem Modul/Abschnitt vorgesehen. So können zum Beispiel bei größeren Baugrößen ohne weiteres 24 und mehr Spindeln zum Einsatz kommen.
Die Planetspindeln können zum Beispiel als Normalspindeln , als Igelspindeln oder Noppenspindeln ausgebildet sein, wie sie in der DE 10 2004 048 440 oder in der US 7476416 beschrieben sind. Die Normalspindeln besitzt eine von einem Ende zum anderen Ende durchgehend gleiche Verzahnung.
Die Igelspindel baut auf der Normalspindel auf. In Abständen sind bei den Igelspindeln ringförmig umlaufende Ausnehmungen in die Verzahnung eingearbeitet, so dass in einer seitlichen Betrachtung einer Spindel eine meandernde Kontur ersichtlich ist.
Die Noppenspindel baut auch auf einer Normalspindel auf. Dabei ist die Spindel allerdings nach der Normalverzahnung mit einer gegenläufigen Verzahnung versehen, welche die Normalverzahnung kreuzt. Das heißt, in die Zähne der Normalverzahnung werden mit der gegenläufigen Verzahnung Lücken von bestimmter Form und Folge geschnitten. Die von der Normalverzahnung bleibenden Zähne zeigen eine Noppenform. Durch die Lücken reduziert sich die Förderwirkung der Planetspindeln, während die Knetwirkung zunimmt. Außerdem unterscheidet sich der Knetvorgang mit den Noppen von dem Knetvorgang mit der Normalspindel und der Igelspindel.

Die zu den Igelspindeln und Noppenspindeln genannten Druckschriften beschreiben weitere nützliche Einzelheiten von Planetwalzenextrudern, die für eine Devulkanisierung geeignet sind.

Die Temperatur des Behandlungsgutes wird im Planetwalzenextruder durch Zuführung von Wärme bzw. durch Kühlung auf ein für die Devulkanisierung gewünschtes Niveau gebracht.
Dieses Niveau liegt nach der WO2011/091966 zwischen 250 und 350 Grad Celsius, vorzugsweise zwischen 250 und 300 Grad Celsius.

Die Knetwirkung und Wärmewirkung wird für die Dauer von 1 bis 4 min, vorzugsweise 1,5 bis 3 min aufrecht erhalten. Diese Dauer entspricht der Aufenthaltsdauer in dem Planetwalzenextruder.
Bei der Knetung und Erwärmung des Altgummis im Planetwalzenextruder wird die Schwefel-Verbindung gesprengt. Der Schwefel geht in einen gasförmigen Zustand über. Das Gas wird abgesaugt. Am Extruder wird das als Entgasung bezeichnet.

Die genaue Bestimmung der materialabhängigen jeweils richtigen Knetwirkung und Temperatur lässt sich durch Änderung der Durchlaufzeit und Änderung der Temperatur in wenigen Versuchen anhand der Versuchsergebnisse erreichen.
Bei richtiger Devulkanisierung entsteht nach entsprechender Behandlungsdauer/Aufenthaltsdauer von Gummi und Elastomeren ein flockiges Material ohne nennenswerte Festigkeit.
Bei zu hoher Temperatur zeigt das Behandlungsgut/Einsatzmaterial die Überhitzung optisch, zum Beispiel als Verbacken.
Bei zu geringer Temperatur wird die Vernetzung nicht ausreichend aufgehoben, das ausgetragene Material ist zwar flexibel, zeigt zumindest aber teilweise seine Festigkeit.

Der Planetwalzenextruder ist für die gewünschte Temperierung von Altgummi besonders geeignet, wenn das Gehäuse innenseitig in bekannter Weise eine Buchse besitzt, die zentralspindelseitig mit der beschriebenen Innenverzahnung versehen ist und außenseitig mit einer gleichen Normalverzahnung oder anderen Normalverzahnung versehen ist. Die Buchse wird vorzugsweise in das Gehäuse geschrumpft. Dazu wird die Buchse gekühlt, so dass sich der Durchmesser ausreichend verringert, um in das Gehäuse geschoben zu werden. Bei der Wiedererwärmung dehnt sich die die Buchse und sitzt die Buchse fest in dem Gehäuse. Das Gehäuse kann auch auf die Buchse geschrumpft werden. Dann wird das Gehäuse erwärmt und dehnt sich das Gehäuse, so dass die Buchse in das Gehäuse geschoben werden kann. Nach Abkühlung umschließt das Gehäuse die Buchse fest.
Sowohl beim einen Schrumpfvorgang wie auch beim anderen Schrumpfvorgang verschließt das Gehäuse die Gänge der außenseitigen Verzahnung an der Buchse. Dadurch können diese Gänge als Kanäle für die Durchleitung von Temperierungsmittel genutzt werden.
Die Kanäle werden vorzugsweise durch einen Ringkanal an den Gehäuseenden miteinander verbunden. Der eine Ringkanal ist zulaufseitig vorgesehen und mit einer Zulaufleitung verbunden. Der andere Kanal ist ablaufseitig vorgesehen und mit einer Ablaufleitung verbunden. Beide Leitungen sind Bestandteil einer Temperierung. Als Temperierungsmittel dient beim Devulkanisieren Öl.
Das Öl wird durch die Kanäle gepumpt.
Je nach Öltemperatur bewirkt das eine Kühlung oder Beheizung.

Je nach Materialbeschaffenheit des Altgummis kann ein Extruder verwendet werden, dessen Länge ausreicht, um die gesamte Devulkanisierung in einem Extruder vorzunehmen. Das heißt, der Extruder hat dann eine Länge, in der sich die gesamte gewünschte Verweilzeit darstellen lässt.
Vorzugsweise finden jedoch Extruder Anwendung, die aus miteinander fluchtenden Modulen/Abschnitten zusammengesetzt sind. Jeder Modul besitzt ein eigenes Gehäuse und eigene Planetspindeln und einen eigenen Anlaufring.

Vorzugsweise ist für alle miteinander fluchtenden Module/Abschnitte eine gemeinsame Zentralspindel vorgesehen.
Die Module/Abschnitte besitzen wahlweise insgesamt oder teilweise eine Länge von kleiner/gleich 800mm, vorzugsweise von kleiner/gleich 600mm und noch weiter bevorzugt von kleiner/gleich 500mm.
Durch kleinere Längen einzelner oder aller Module/Abschnitte kann eine Anpassung an unterschiedliche Temperaturanforderung erfolgen.
Darüber hinaus kann die Temperierung an einem längeren Extrudermodul/Extruderabschnitt auch in verschiedene Abschnitte unterteilt werden, die in axialer Richtung hintereinander liegen.
Es können aber auch Modullängen von mehr als 1000 mm, zum Beispiel 1400 mm Anwendung finden.
Je größer der Extruderdurchmesser ist, desto größer wird in der Regel der Durchsatz. Mit der Erhöhung des Durchsatzes kann sich die Verweildauer von Gummi und Elastomeren in dem Extruder verlängern und eine größere Extruderlänge ergeben.

Mit der Modulbauweise/Abschnittsbauweise eröffnet sich am Planetwalzenextruder auch die Möglichkeit zur Änderung der Knetwirkung durch Änderung der Verzahnung bzw. durch Einbau von Modulen mit unterschiedlicher Verzahnung.
Soweit gleiche Module bereits vorgesehen sind, kann im Nachhinein noch eine Änderung der Knetwirkung und Durchlaufzeit durch Auswechselung der Plenetspindeln bzw. durch Reduzierung der Planetspindelzahl erreicht werden.
Dies beinhaltet bei einem Wechsel des Einsatzgutes einen gravierenden praktischen Vorteil.
In dem Sinne können Noppenspindeln mit Normalspindeln und/oder mit Igelspindeln kombiniert werden. Die Noppenspindeln stellen das eine Extrem für die Bearbeitung von Gummi im Extruder dar, die Wirkung von Igelspindeln und Normalspindeln weicht davon ab. Wenn sich zeigt, dass die Durchlaufzeit in obigem Sinne zu lang ist, können einzelne oder mehrere Noppenspindeln gegen Igelspindeln oder Normalspindeln ausgewechselt werden. Wahlweise finden auch zur Verkürzung der Durchgangszeit Transportspindeln Anwendung, wie sie in der EP702739 beschrieben sind. Das heißt, es werden einzelne oder mehrere Noppenspindeln gegen Transportspindeln ausgewechselt.
Die Transportspindeln bauen gleichfalls auf den Normalspindeln auf. Dabei werden nach der Normalverzahnung einer Spindel einzelne oder mehrere Zähne aus der Spindel herausgearbeitet.

Günstig ist bei der Verarbeitung von Gummi oder dergleichen auch eine unterschiedliche Länge der Planetspindeln, so dass das in einen Planetwalzenmodul eingespeiste Material schonend und nicht schlagartig insgesamt von der Verzahnung ergriffen wird.

Die Anwendung des nach der WO2011/091966 vorgesehenen Verfahrens hat zu einer erfolgreichen Devulkanisierung von Altgummi geführt. Dabei setzt sich die verwendete Anlage aus einem Füllteil und verschiedenen Planetwalzenmoduln zusammen.

Die DE102015010460 geht von der Überlegung aus, die nach Verlassen des Füllteiles vorgesehene Aufwärmung des Einsatzmaterials auf Starttemperatur für die Devulkanisierung von der Devulkanisierung zu trennen.
Bereits für die Aufwärmzone ist die Verwendung eines Dispergierringes von Vorteil. Dieser Ring trägt zur mechanischen Bearbeitung des Einsatzmaterials bei. Außerdem vergleichmäßigt der Dispergierring den Materialfluß in die Aufwärmzone. Das erleichtert die Steuerung der Aufwärmung.

Nach der DE102015010460 ist die Devulkanisierungszone die Zone, in der
- nach Passieren eines Dispergierringes
- unter gleichzeitiger mechanischer Bearbeitung des Altgummis im Planetwalzenextruder
- eine Entgasung des Materials stattfindet.

Außerdem ist günstig, die Devulkanisierungszone in eine Startphase und in die Phase weiterer Devulkanisierung zu unterteilen.

Aus Sicht der DE102015010460 muss der durch Aufbrechen der molekularen Vernetzung frei werdende Schwefel zumindest weitgehend aus dem Extruder ausgetragen werden, um zu einem Rohstoff mit ausreichender Qualität zu kommen.
Die Trennung der Aufwärmzone von der Devulkanisierungszone wird durch modularen Aufbau des Planetwalzenextruders erreicht, wobei der Aufwärmzone ein eigener Planetwalzenmodul mit separater Temperierung(Kühlung/Beheizung) zugeordnet wird.
Im Extremfall kann die Devulkanisierung in einem einzigen Planetwalzenmodul stattfinden. Vorzugsweise sind jedoch mehrere Planetwalzenmodule mit jeweils separater Temperierung (Kühlung/Beheizung) erfolgen. Außerdem ist günstig, für die Startphase wie für die Aufwärmzone einen separaten Planetwalzenmodul mit eigener/separater Temperierung(Kühlung/Beheizung) vorzusehen.

Der Dispergierring am Anfang der Devulkanisierungszone befindet sich vorzugsweise zwischen dem Modul für die Aufwärmung und dem ersten Modul der Devulkanisierungszone.

Wahlweise kann noch mindestens ein weiterer Dispergierring im Abstand von dem ersten Dispergierring in der Devulkanisierungszone Anwendung finden, um eine zusätzliche mechanische Belastung aufzubauen. Wie am ersten Dispergierring wird die mechanische Belastung des Einsatzgutes am zweiten Dispergierring auch dadurch erreicht, dass das Einsatzgut durch einen engen Durchtrittsspalt am Dispergierring gezwungen wird.

Nach der DE102015010460 wird der Durchtrittsspalt an einem Dispergierring in Abhängigkeit von der jeweiligen Beschaffenheit des Einsatzgutes gewählt. Für pulverförmiges Einsatzgut wird ein sehr enger Spalt und langer Spalt gewählt, der zwingend zu der gewünschten Verformung und damit verbundenen mechanischen Belastung führt. Entsprechendes gilt für feinkörniges Einsatzmaterial. Bei grobem Material führt auch ein relativ großer und kurzer Spalt zu der gewünschten Verformung und damit verbundenen mechanischen Belastung. Angestrebt wird die Verarbeitung möglichst groben Materials. Das entlastet die Aufbereitung von Altgummi für die Verarbeitung im Planetwalzenextruder. Das heißt, das Altgummi wird durch das zum Beispiel vorgesehene Schreddern und/oder Mahlen nur in eine grobe Körnung gebracht. Das ist mit weniger Arbeit, Aufwand und Kosten als das Schreddern und Mahlen in eine feine Körnung verbunden. Extrem wird die Ersparnis gegenüber einer Pulverform.

Nach Passieren des ersten Dispergierringes und Bearbeitung in dem zugehörigen Planetwalzenextruderabschnitt ändert sich die Beschaffenheit des Einsatzmaterials. Gummi und Elastomere werden nachgiebiger. Das wird bei der Wahl des nächsten Dispergierringes berücksichtigt. Im Folgenden wird von einer Spaltweite und Spaltlänge der Dispergierringe gesprochen. Damit ist jeweils die Öffnung zwischen Dispergierring und Zentralspindel gemeint.
Bei gleichbleibender Temperatur werden vorzugsweise Dispergierringe gewählt, deren Spaltweite mit größer werdender Verarbeitungsstrecke abnimmt und/oder deren Spaltlänge mit größer werdender Verarbeitungsstrecke zunimmt. Die Verarbeitungsstrecke ist die Strecke, auf der das Einsatzmaterial/Behandlungsgut bearbeitet wird. Die Verarbeitungsstrecke wird umso größer, je mehr Planetwalzenextruder zu einer Extruderanlage kombiniert/aneinander gesetzt werden.

Beispielsweise können sich Extruderanlagen ergeben, in denen die Öffnungsweite
- des zweiten Dispergierringes gegenüber der Öffnungsweite des ersten Dispergierringes um mindestens 5%, vorzugsweise um mindestens 10%, noch weiter bevorzugt um mindestens 15% geringer ist,
- des dritten Dispiergierringes gegenüber der Öffnungsweite des zweiten Dispergierringes um mindestens 5%, vorzugsweise um mindestens 10%, noch weiter bevorzugt um mindestens 15% und höchst bevorzugt um mindestens 20% kleiner ist.
- des dritten Dispiergierringes gegenüber der Öffnungsweite des zweiten Dispergierringes um mindestens 5%, vorzugsweise um mindestens 10%, noch weiter bevorzugt um mindestens 15% und höchst bevorzugt um mindestens 20% kleiner ist.
- des vierten Dispiergierringes gegenüber der Öffnungsweite des dritten Dispergierringes um mindestens 5%, vorzugsweise um mindestens 10%, noch weiter bevorzugt um mindestens 15% und höchst bevorzugt um mindestens 20% kleiner ist.

Dabei können sich, bezogen auf die Baugröße, für den ersten Dispergierring zum Beispiel folgende Spaltweiten ergeben:

| Baugröße | Spaltweite |
|---|---|
| 50mm | 4,5mm |
| 70mm | 4,5mm |
| 100mm | 7mm |
| 150mm | 7mm |
| 180mm | 9mm |
| 200mm | 8,5mm |
| 250mm | 8mm |
| 280mm | 13mm |
| 300mm | 16mm |
| 350mm | 16mm |
| 400mm | 17mm |

Die Spaltweite/Öffnungsweite des Spaltes am Dispergierring bezeichnet den Abstand zwischen der Außenfläche der Zentralspindel und der gegenüberliegenden Innenfläche des Dispergierringes an der betreffenden Stelle.

Die Länge des Spaltes der Dispergierringe ist von deren Dicke abhängig. Die Dicke kann zum Beispiel 1 bis 25mm, vorzugsweise 3 bis 20mm betragen.

Günstig ist eine Veränderbarkeit der Spaltlänge. Im Zweifel erfolgt die Veränderung der Spaltlänge durch Auswechselung eines Dispiergierringes gegen einen anderen Dispiergierring mit größerer oder kleinerer Dicke. Das kann jedoch gleichzeitig zu einer Auswechselung der Zentralspindel zwingen. Vor Vorteil ist, die Zentralspindel unverändert zu lassen. Dazu können die auswechselbaren Dispergierringe gehäuseseitig mit einem gleichbleibend dicken Bund und zentralspindelseitig mit einem Kragen versehen sein, der nach Wahl dicker oder dünner ist.

Die Ausbildung mit dickerem Bund und dünnerem Kragen erlaubt auch eine Zusammensetzung des Dispergierringes aus zwei Hälften oder mehr Segmenten, die um die Zentralspindel herum zusammengesetzt werden und dabei mit dem Kragen in eine Nut bzw. Eindrehung der Zentralspindel greifen.

Die Dispergierringe können im Spaltbereich genau zylindrisch sein. Vorzugsweise sind die Dispergierringe an der spaltbildenden Fläche an den Kanten gerundet und zwischen den Kanten mit einer strömungsgünstigen Konizität versehen, so dass keine Toträume im Spalt entstehen. Wahlweise gibt es einen Eintrittskonus und einen Austrittskonus an den Dispierringen. Der Austrittskonus kann länger als der Eintrittskonus sein.
Die konischen Flächen der Dispergierringe haben dabei vorzugsweise eine Neigung von 1 Grad bis 45Grad, noch weiter bevorzugt eine Neigung zwischen 10Grad bis 35Grad und höchst bevorzugt eine Neigung von 15Grad bis 30Grad zur Mittelachse der Dispergierringe.

Zu den spaltbildenden Flächen gehören auch die Flächen der Eindrehung. Vorzugsweis sind die Kanten und Ecken der Eindrehung zur Vermeidung von Toträumen auch gerundet. Toträume sind Räume, in denen sich Material absetzen kann, ohne von nachströmendem Material weggeschoben zu werden.
Nach der DE102015010460 bleibt die Eindrehung in der Zentralspindel vorzugsweise unverändert und erfolgen Änderungen des Spaltes, insbesondere dessen Erweiterung oder Reduzierung und sonstige Formgebung durch Änderung des Dispergierringes.

Vorteilhafterweise kann durch Temperierung des Extruders auf die Verformungsfähigkeit des Einsatzmaterials Einfluß genommen werden. Durch Erwärmung nimmt die Verformungsfähigkeit zu, durch Kühlung nimmt die Verformungsfähigkeit ab. Das kann auch genutzt werden, um Dispergierringe mit einer Spaltweite bzw. Spaltlänge einsetzen zu können, die bei anderer Temperatur des Einsatzmaterials nur zu einer unzureichenden Bearbeitung des Einsatzmaterials führen.

Bei modularem Aufbau der Extruderanlage können die Dispergierringe jeweils zwischen zwei Planetwalzenmodulen und/oder einem das Füllteil bildenden und nach Art einer Einschnecke ausgebildeten Modul und einem sich anschließenden Planetwalzenmodul angeordnet werden. Das erleichtert die Montage der Dispergierringe und deren Auswechselung, so dass die Dispergierringe dem jeweiligen Einsatzgut und dem jeweiligen Verarbeitungszustand in der Anlage angepasst werden können. Das gilt insbesondere für Dispergierringe, die nicht in eine Nut der Zentralspindel greifen.

Aber auch bei Dispergierringen, welche in eine Nut der Zentralspindel greifen, ist eine Auswechselung der Dispergierringe mit abweichender Spaltlänge möglich, ohne dass die Zentralspindel ausgewechselt werden muss, solange die Nut beibehalten werden kann.

Die Anordnung zwischen zwei Modulen erlaubt es, die Dispergierringe beim Verspannen der zugehörigen Modulgehäuse-Enden mit zu verspannen. Dieser Vorteil wird üblicherweise auch zur Montage der zu einem Planetwalzenmodul gehörigen Anlaufringe genutzt. Vorzugsweise werden die Anlaufringe und die Dispergierringe in einer gemeinsamen Konstruktion zusammen gefasst, wenn die Dispergierringe zum Beispiel zwischen zwei Planetwalzenmodulen eingesetzt werden. Die gemeinsame Konstruktion kann ein Zentrierring sein, in den die Anlaufringe und die Dispergierringe eingelegt werden. Dabei kann beim Verspannen der Gehäuse zum Beispiel das Gehäuse des in Förderrichtung hinteren Moduls gegen den Dispergierring drücken, der Dispergierring gegen den Anlaufring und der Anlaufring gegen das Gehäuse des in Förderrichtung vorderen Moduls. Zugleich wird eine Zentrierung dieser Maschinenteile dadurch bewirkt, dass der Zentrierring in dem Gehäuse des vorderen Moduls zentriert ist, der Anlaufring und der Dispiergierring in dem Zentrierring zentriert ist, und das Gehäuse des in Förderrichtung hinteren Moduls an dem Dispiergierring, weil der Dispergierring gegenüber dem Zentrierring etwas vorsteht und das vorstehende Ende von dem Gehäuse des hinteren Moduls umfasst wird.

Der Vorteil der Anordnung der Dispergierringe zwischen zwei benachbarten Planetwalzenmodulen bzw. zwischen einem nach Art einer Einschnecke ausgebildeten Füllteilmodul und einem Planetwalzenmodul kann so groß sein, dass die Modullänge auf die gewünschte Position der Dispergierringe abgestellt wird.

Im Übrigen kann durch Verwendung von Zentralspindeln, welche gleichfalls modular aufgebaut sind, eine Teilauswechselung der Zentralspindel bei größer werdender Spaltlänge stattfinden. Dann beschränkt sich die Auswechselung auf die betreffenden Spindelteile oder die mit der Auswechselung der betreffenden Spindelteile verbundene Spaltänderung ergänzt die mit einer Auswechselung des Dispergierringes verbundene Spaltbildung.

Bei modularem Aufbau besteht eine Zentralspindel häufig aus einem mittigen Anker, auf dem verzahnte Hülsen ihrerseits als Module der Zentralspindel aufgeschoben werden. Die Hülsen werden mit dem Anker gegeneinander verspannt. Außerdem kann eine Nut-Feder-Verbindung zwischen dem Anker und den Hülsen vorgesehen sein. Über den Anker wird das zum Bewegen der Zentralspindel notwendige Drehmoment auf die Hülsen übertragen.
Üblicherweise wird das Drehmoment mit einem Antriebsmotor erzeugt und über ein Getriebe auf die Zentralspindel übertragen.
Darüber hinaus ist es möglich, die verschiedenen Hülsen nach Art von Zahnkupplungen miteinander zu verzahnen, so dass das notwendige Drehmoment auch unmittelbar vom Getriebe auf die Hülsen übertragen werden kann. Dabei gibt eine Hülse das Drehmoment an die andere Hülse weiter.
Die Hülsen tragen am äußeren Umfang die notwendige Verzahnung für das Zusammenwirken mit den Planetspindeln in einem Planetwalzenextruder bzw. Planetwalzenmodul.

Soweit in der Zentralspindel eine Nut für einen Dispergierring vorgesehen ist, kann die Nut durch ein außen ganz oder teilweise glattes Hülsen/Zentralspindelmodul gebildet werden. Für eine Änderung der mit einem Dispergierring korrespondierenden Nut kann eine Auswechselung eines vorhandenen Zentralspindelmoduls gegen ein passendes anderes Modul erfolgen.

Die Entgasung erfolgt wie nach der WO2011/091966 vorzugsweise mittels eines Seitenarmextruders, wobei der zur Entgasung genutzte Seitenarmextruder noch weiter bevorzugt senkrecht auf dem Planetwalzenextruder bzw. auf seinem zugehörigen Planetwalzenmodul sitzt.
Zur Fortsetzung der Devulkanisation ist von Vorteil, wenn nach jedem weiteren Dispergierring eine weitere Entgasung vorgesehen. Noch weiter bevorzugt erfolgt die weitere Entgasung auch wieder über Seitenarmextruder. Zusätzlich kann eine Entgasung am Extruderaustritt erfolgen. Dann sind am Extruderaustritt ein weiterer Dispergierring und eine Gasabsaugung vorgesehen. Die Gasabsaugung am Extruderaustritt ist sehr wirkungsvoll, weil das Gas aufgrund seiner Wärme expandiert, sich aus dem Einsatzmaterial löst und aufsteigt.

Bei Verwendung von Seitenarmextrudern zur Entgasung kann das Gas kann dann sehr gut abgesaugt werden. Das geschieht in geringem Abstand von dem Dispergierring, der dem betreffenden Modul vorgeschaltet ist. Dort bildet sich der größte Hohlraum bei der vorgesehenen Teilfüllung des Moduls.

Wenn eine Anlage nach der WO2011/091966 vier Planetwalzenmodule besitzt, ergibt sich nach der DE102015010460 mit der separaten Aufwärmphase und der separaten Startphase eine Zahl von 5 Planetwalzenmodulen. Dabei kann sich zwar eine größere Gesamtlänge ergeben, die Gesamtlänge der Anlage unterscheidet sich jedoch vorzugsweise nicht wesentlich von der Länge einer Anlage nach der WO2011/091966. Die Module für die Aufwärmzone und für die Startphase müssen nach der DE102015010460 zusammen nicht länger als ein nach der WO2011/091966 vorgesehener Planetwalzenmodul sein. Die DE102015010460 schließt allerdings auch eine größere Gesamtlänge oder eine kleinere Gesamtlänge ein.
Wahlweise können die Module für die Aufwärmzone und die Startphase dabei gleiche Länge aufweisen.
Je nach Baugrößen der Planetwalzenextruder/Module ergeben sich folgende bevorzugte Längen

| Baugröße | Modullänge Aufwärmzone | Modullänge Startphase |
|---|---|---|
| 50iger bis 70iger | 100 bis 300mm | 100 bis 300mm |
| 100er bis 150iger | 250 bis 600mm | 250 bis 650mm |
| 170iger bis 250iger | 300 bis 650mm | 300 bis 650mm |
| 280iger bis 300er (schwere Ausführung) | 320 bis 800mm | 320 bis 800mm |
| 350iger | 300 bis 650mm | 300 bis 650mm |
| 400er (schwere Ausführung) | 320 bis 800mm | 120 bis 800mm |
| 400er | 320 bis 800mm | 320 bis 800mm |
| 500er bis 1000er | 350 bis 1000mm | 350 bis 1000mm |
| 500er bis 1000er Schwere Ausführung | 350 bis 1000mm | 350 bis 1000mm |

Die Baugröße entspricht dem Teilkreisdurchmesser der Innenverzahnung im Gehäuse bzw. in der Gehäusebuchse.

In der Aufwärmzone wird die für den Start der Devulkanisation notwendige Energie zugeführt. Das erfolgt durch die mechanische Bearbeitung in der Aufwärmzone und durch eine Beheizung der Aufwärmzone. Je stärker Energie durch mechanische Bearbeitung in das Einsatzmaterial eingetragen wird, desto weniger Energiezufuhr durch Beheizung ist erforderlich und umgekehrt. Je stärker beheizt wird, desto geringer kann die mechanische Bearbeitung sein. Die hat erkannt, dass eine starke Beheizung mit einer Temperatur des Temperierungsmittels von mehr als 300 Grad Celsius bei geringer Drehzahl der Zentralspindel in der Aufwärmzone von Vorteil ist. Vorzugsweise ist dort eine Temperatur von mehr als 320 Grad Celsius, noch weiter bevorzugt von mehr als 340 Grad Celsius vorgesehen. Die Temperatur des Beheizungsmittels kann auch zwischen 350 und 400 Grad Celsius liegen. Infolge der kurzen Verweildauer des Einsatzmaterials in der Aufwärmzone und infolge der intensiven Materialmischung in der Aufwärmzone und des damit verbundenen Energieeintrages erfährt das Einsatzmaterial dadurch eine sehr schnelle Aufwärmung auf Starttemperatur für die Devulkanisierung. Die Starttemperatur ist materialabhängig und wird zweckmäßigerweise im Labor bestimmt. Die Starttemperatur kann auch in der Anlage ermittelt wird, indem
- eine Temperatur eingestellt wird, die mit Sicherheit im Startbereich liegt und
- die Temperatur anschließend heruntergefahren wird, bis das ausgetragene devulkanisierte Material eine gewünschte Qualität erreicht hat

Vorzugsweise liegt die Starttemperatur unter 300 Grad Celsius und wird die Temperatur in weiteren Teilen der Devulkanisierungszone nicht über die Starttemperatur erhöht. Noch weiter bevorzugt wird die Temperatur in den weiteren Teilen der Devulkanisierungszone niedriger als die Starttemperatur gehalten. Dabei kann es zweckmäßig sein, die Temperatur von Planetwalzenmodul zu Planetwalzenmodul zu verringern, um Viskosität des Einsatzmaterials während der Devulkanisation auf einem gleichen Niveau zu halten. Es kann auch die Viskosität durch Änderung der Kühlung und gegebenenfalls durch Beheizung verändert werden.
Bei gleichbleibender Viskosität des Einsatzmaterials können in allen dafür vorgesehenen Planetwalzenmodulen der Devulkanisationszone gleiche Dispergierringe Anwendung finden. Das erleichtert die Vorratshaltung für die Dispergierringe. Bei gewünschter Änderung der Viskosität finden für weitere Verformungsarbeit in der Devulkanisationszone finden vorzugsweise unterschiedliche Dispergierringe Anwendung.

Die zugehörige Temperatur des Temperierungsmittels liegt in entsprechender Höhe zur Temperatur des Einsatzmaterials/Behandlungsgutes. Entsprechend heißt bei Kühlung: die Temperatur des Temperierungsmittels ist geringer als die des Einsatzmaterials, um das notwendige Temperaturgefälle zur Erzeugung des gewünschten Wärmeflusses vom Einsatzmaterial zum Temperierungsmittel zu bewirken. Entsprechend heißt bei Beheizung: die Temperatur des Temperierungsmittels ist höher als die des Einsatzmaterials, um das notwendige Temperaturgefälle zur Erzeugung des gewünschten Wärmeflusses von dem Temperierungsmittel zum Einsatzmaterial zu erzeugen.

Das Einstellen einer Temperatur, welche unter dem Startbereich liegt, und ein anschließendes Hochfahren der Temperatur sind nicht empfehlenswert, weil das leicht zu einem Betriebsstillstand führen kann.

Bis zu einer Temperatur von 350 Grad Celsius kann mit handelsüblichen Ölen als Temperierungsmittel gearbeitet werden. Über 350 Grad Celsius kann zwar auch mit Öl als Temperierungsmittel gearbeitet werden. Das Öl soll nach der Erfindung jedoch unter Stickstoff oder einem anderen inerten Mittel stehen, um einer Entzündung des Öls entgegen zu wirken.

Für die Temperierung des Einsatzmaterials ist von Vorteil, wenn die Anlaufringe und/oder alle Zwischenringe und/oder alle Dispergierringe mit einer Temperierung versehen sind. Dazu sind dann in den Ringen entsprechende Kanäle vorgesehen, die mit Temperierungsmittel beaufschlagt werden. Wenn die Ringe entweder dicht am Spalt oder sogar im Spalt zwischen den Planetwalzenmodulen angeordnet sind, kann das Temperierungsmittel mit einer Leitung durch den Spalt zu den Ringen geführt bzw. durch den Spalt von den Ringen wieder abgeführt werden.

Vorzugsweise wird zumindest die Temperatur des Einsatzmaterials bzw. des bearbeiteten Materials an allen Anlaufringen und/oder Zwischenringen und/oder Dispergierringen kontrolliert. Noch weiter bevorzugt wird auch der Druck an den Dispergierringen, noch weiter bevorzugt vor und/oder hinter den Dispergierringen kontrolliert.

Für die Aufwärmung des Einsatzmaterials ist eine mehrschalige Gehäuseausbildung der Planetwalzenmodule mit einer dünnen, innen verzahnten Gehäusebuchse von Vorteil. Je dünner die Gehäusebuchse ist, desto besser ist der Wärmeübergang vom Temperierungsmittel zum Einsatzmaterial. Die Dickenreduzierung ist durch die notwendige Stabilität der Gehäusebuchse begrenzt.
Günstig ist für eine geringe Dicke ist, wenn das Gehäuse mit der Gehäusebuchse eine Schrumpfverbindung hat.

In der Startphase der Devulkanisierung ist eine intensive Entgasung vorgesehen. Dazu wird nach der DE102015010460 vorzugsweise eine kurze Bearbeitungsstrecke bzw. Entgasungsstrecke gewählt.

Es ist für die Entgasung günstig, wenn die Planetwalzenmodulen einen Füllgrad kleiner 90%, vorzugsweise kleiner 80%, noch weiter bevorzugt kleiner 70% aufweisen. Es können auch Füllgrade kleiner 60 % und sogar kleiner 50% zweckmäßig sein. Der Füllgrad wird mit Erhöhung der Drehzahl kleiner.

Die Entgasungsvorrichtungen sind jeweils dort an den Planetwalzenmodulen angeflanscht, wo aufgrund des Füllgrades kleiner 100% sich ein Hohlraumvolumen bildet.

Alle Entgasungsvorrichtungen können an eine gemeinsame Saugleitung angeschlossen sein. Die abgesaugten Gase werden gereinigt, bevor sie in die Umgebungsluft abgelassen werden. Als einfacher und wirkungsvoller Reinigungsfilter kann ein Aktivkohlefilter Verwendung finden.

Die Ergebnisse der Trennung zwischen Aufwärmzone und Devulkanisationszone sind verblüffend.
In der Aufwärmzone kann das Einsatzmaterial bestens auf den Beginn der Devulkanisierung vorbereitet werden.
In der Startphase können unabhängig von der nachfolgenden Bearbeitung ideale Startbedingungen geschaffen werden.
Während bei einer Arbeitsweise nach der WO2011/091966 in größeren Anlagen mit Betriebsstörungen gerechnet werden kann, entwickelt sich bei Anwendung der Lehre aus der DE102015010460 ein stabiler Prozess mit gut devulkanisiertem Austrittsmaterial.
Dabei lassen sich Mooney-Zahlen von 20 bis über 60, vorzugsweise 30 bis 50, noch weiter bevorzugt 35 bis 45, erreichen. Mit einem Mooney-Viskosimeter wird die Viskosität des austretenden Materials gemessen.
Das Mooney-Viskosimeter besitzt eine Spindel, die bei einer bestimmten Materialprobentemperatur in der Materialprobe gedreht wird. Dann gibt das zur Spindeldrehung notwendige Drehmoment Aufschluß über die Viskosität des Probenmaterials. Die angegebenen Mooney-Zahlen beziehen sich auf eine Temperatur von 100 Grad Celsius.
Im Vergleich zu den nach der WO2011/091966 bei gleicher Temperatur erzielbaren Mooney-Zahlen liegen die nach der DE102015010460 erzielbaren Mooney-Zahlen deutlich höher.
Der Prozess ist nach Anspringen der Devulkanisierung vorteilhafterweise so stabil, dass die Drehzahl der Zentralspindel erhöht werden kann. Das ist bei entsprechendem Nachfüttern von Einsatzmaterial gleichbedeutend mit einer Leistungserhöhung der Anlage. Mit vergleichbaren Anlagen und mit vergleichbarem Einsatzmaterial konnte die Leistung bei einem Verfahren nach der DE102015010460 in Versuchen ohne weiteres bis zum 3fachen gegenüber einer Anlage und einem Anlagenbetrieb nach der WO2011/091966 gesteigert werden.

Hinzu kommt, dass nach der DE102015010460 eine Verstellung des Anlagenbetriebes in größeren Schritten möglich war. Das ist von großer Wichtigkeit für die Frage zulässiger Schwankungen beim Einsatzmaterial.
Ferner hat sich ergeben, dass sich die Devulkanisation teilweise ohne weitere Extruderarbeit und unter Reduzierung der Beheizung fortsetzt. Das wird beim Materialaustritt aus dem Extruder deutlich. Dort ist je nach Länge des Extruders bzw. je nach Länge der vorhergehenden Entgasungsstrecke noch ein deutlicher Gasaustritt zu verzeichnen, dem mit einer Absaugung Rechnung getragen werden sollte, um ein Entweichen ungefilterten Gases in die Umgebung zu verhindern.

Die Erfindung knüpft an die Verbesserungen beim Devulkanisieren an, die in der DE102015010460 beschrieben sind. Ein noch ungelöstes Problem bei der Devulkanisation mit Planetwalzenextrudern ist der Materialeinzug. Bei üblichem Einzug mit einem nach Art eines Einschneckenextruders ausgebildeten Füllteil zeigen sich am Übergang von dem Füllteil in den Planetwalzenextruder bzw. in den Planetwalzenextrudermodul schon nach geringer Betriebsdauer Störungen. Insbesondere bei Füllteilen, welche für Planetwalzenabschnitte mit einer Baugröße größer 150 bestimmt sind, kommt es zu leicht zu wiederkehrenden Störungen. Extrem belastend werden die Störungen bei Füllteilen, welche für Planetwalzenextruderabschnitten mit einer Baugröße von größer gleich 350 bestimmt sind. Die Baugrößenangaben entsprechend dem Teilkreisdurchmesser der Innenverzahnung an Gehäusen eines Planetwalzenextruderabschnittes.

Der Erfindung liegt die Aufgabe zugrunde, die Betriebsstörungen zu beseitigen. Das wird mit den Merkmalen des Hauptanspruches erreicht. Die Unteransprüche beinhalten bevorzugte Ausführungsbeispiele.

Dabei geht die Erfindung von der Erkenntnis aus, dass es bei Anwendung eines Planetwalzenextruderabschnittes als Füllteil Störungen beim Materialeinzug *geben kann, die* von geringer werdender Reibung zwischen dem Material und den Planetspindeln verursacht werden. Die Planetspindeln werden immer glatter. Der Planetwalzenextruder besitzt an sich als Füllteil einen schwächeren Einzug als ein Füllteil, welches nach Art einer Einschnecke ausgebildet ist. Mit der Einschnecke kann ein sehr viel höherer Druck als mit einem Planetwalzenextruder aufgebaut werden.
Der höhere Druck ist günstiger, um das Material vom Füllteil an einen nachfolgenden Extruderabschnitt zu übergeben.
Der Planetwalzenextrudermodul nimmt als Füllteil das zu verarbeitende Material sehr viel schlechter als ein Füllteil auf, welches nach Art eines Einschneckenextruders ausgebildet ist. Das wird darauf zurückgeführt, dass die Planetspindeln eines als Planetwalzenextruderabschnitt ausgebildeten Füllteils durch den Materialstrom bewegt werden. Zugleich drehen sich die Planetspindeln, so dass die Partikel in dem Materialstrom einen mehr oder weniger heftigen Stoß entgegen der vorgesehenen Strömungsrichtung erfahren.
Umso mehr überrascht die Beseitigung der Betriebsstörungen, wenn die zu devulkanisierenden Partikel exzentrisch zur Mitte des Planetwalzenextrudermoduls zwischen die Planetspindeln aufgegeben

Bei exzentrischer Materialzuführung werden die zu devulkanisierenden Partikel an der Mitte des Planetwalzenextruders/Moduls vorbeigeleitet. Der Abstand der Partikelströmungsmitte von der Mitte des Moduls kann als Versatz bezeichnet werden. Der Versatz erfolgt in Drehrichtung der Zentralspindel des Planetwalzenextruders. Dabei verläuft die Mittelachse der Materialzuführung im Abstand an der Mittelachse des Planetwalzenextruders vorbei. Vorzugweise ist der Abstand/Versatz größer als ein Viertel des Teilkreisdurchmessers der Verzahnung in dem Extrudergehäuse bzw. der Verzahnung in der innen verzahnten Buchse des Gehäuses. Noch weiter bevorzugt ist der Abstand/Versatz größer als der halbe Fußkreisdurchmesser der Zentralspindelverzahnung. Höchst bevorzugt ist der Abstand (Versatz kleiner als der halbe Fußkreis der Verzahnung in dem Extrudergehäuse bzw. der Verzahnung in der innen verzahnten Buchse des Gehäuses.
Von Vorteil ist, wenn der Durchmesser der Materialzuführung kleiner als der Durchmesser des Fußkreises der Innenverzahnung des Extrudergehäuses bzw. der Innenverzahnung der Buchse in dem Gehäuse. Soweit die Materialzuführung bei erfindungsgemäßer Exzentrizität seitlich über den Raum hinausragt, in dem das Material im Planetwalzenextruder bearbeitet wird, ist in dem Übergang von der Materialzuführung zum Gehäuse des Planetwalzenextruders eine Abschrägung vorgesehen. Durch die Abschrägung verjüngt sich die Materialzuführung am Übergang von der Materialzuführung auf das Extrudergehäuse.
Günstige Verhältnisse ergeben sich dabei, wenn die Schräge im Querschnitt des Extrudergehäuses in etwa auf einer Tangente an den Teilkreisdurchmesser der Innenverzahnung des Extrudergehäuses bzw. der innen verzahnten Buchse des Gehäuses liegt. In etwa heißt, dass die Schräge maximal um ein Maß von der Tangente abweicht, das gleich dem Durchmesser der zu dem Planetwalzenextruder gehörenden Planetspindeln ist, vorzugweise maximal gleich dem halben Durchmesser der zugehörigen Planetspindeln ist und höchst bevorzugt gleich einem Viertel des Durchmessers der zugehörigen Planetspindeln ist.
Die Schräge schließt bei vertikaler Partikelaufgabe in den Planetwalzenenextruder/Modul mit der Horizontalen durch die Planetwalzenmittelachse vorzugsweise einen Winkel von mindestens 30 Grad, noch weiter bevorzugt einen Winkel von mindestens 45Grad und höchst bevorzugt einen Winkel von mindestens 60 Grad ein.
Auf dem Wege wird die Materialzuführung in den Planetwalzenextruder verbessert.
Ähnliche Ergebnisse lassen sich erzielen, wenn anstelle einer gerade verlaufenden Schräge eine auf einer Kurvenbahn verlaufende Schräge vorgesehen ist.

Während bei herkömmlichem drucklosen Materialeintrag die Gefahr besteht, dass die auf die rotierenden Planetspindeln fallenden Partikel zurückgestoßen werden, bevor sie von den Planetspindeln erfaßt werden.

Mit der exzentrischen Materialzuführung können die Partikel sogar drucklos in die Eintrittsöffnung des Extrudergehäuses geführt werden. Das ist besonders wirtschaftlich.

Wahlweise ist zusätzlich ein Stopfwerk vorgesehen, das die zum Devulkanisieren vorgesehenen Partikel zwischen die Planetspindeln des Planetwalzenextruders/Moduls drückt.

Das Stopfwerk kann ein herkömmliches Stopfwerk sein, Solche herkömmlichen Stopfwerke besitzen wahlweise eine vertikal stehende Achse mit daran montierten Paddeln, die so gestellt sind, dass eine Förderwirkung auf die einzuführenden Partikel entsteht. Das Stopfwerk kann auch nach Art einer Extruderschnecke ausgebildet sein und eine Schnecke mit deutlich größerer Förderwirkung als herkömmliche Stopfwerke besitzen.

Noch wesentlich größer ist die Förderwirkung eines als Doppelschneckenextruder ausgebildeten Stopfwerkes. Zumindest mit einem Doppelschneckenextruder kann auch ohne exzentrischen Materialeintrag ein störungsfreier Materialeintrag bewirkt werden.

Im Falle der Verwendung eines Stopfwerkes günstig, wenn der Materialeintrag bei Benutzung eines Stopfwerkes so angeordnet ist, dass die Planetspindeln entgegen der Förderrichtung des Extruders über die Eintragöffnung hinausragen.
Noch günstiger ist, wenn die darüber hinausragenden Enden der Planetspindeln unabhängig von deren sonstiger Verzahnung eine Normalverzahnung tragen.
Die Normalverzahnung gibt den Planetspindeln den größten Halt zwischen der Zentralspindel und dem Gehäuse.

Es kann von Vorteil sein, die zu devulkanisierenden Partikel schrittweise aufzugeben. Zum Beispiel kann in einem ersten Schritt eine Teilmenge desgewünschten Durchsatzes (in kg pro Stunde) aufgegeben, mit der der Devulkanisierungsprozess leichter zu starten ist als mit der Gesamtmenge. Vorzugsweise ist die Teilmenge für den Start der Devulkanisation höchsten 60Gew%, bezogen auf die Gesamtmenge; noch weiter bevorzugt höchstens 50Gew% und höchst bevorzugt höchstens 40Gew%. Die Startmenge kann auch 30Gew% oder noch weniger betragen. Bei einer angestrebten Herstellung von 2.000 kg devulkanisiertem Altgummi ergibt sich dabei eine Startmenge von höchstens 1.200 kg pro Stunde bzw. höchstens 800 kg pro Stunde bzw. 600 kg pro Stunde.
Nach dem Start des Devulkanisierungsprozesses verhält sich der Prozess überraschend stabil. Es kann die Restmenge insgesamt oder in weiteren Teilschritten zugegeben werden, ohne den Prozess zu unterbrechen.
Dieses Verfahren empfiehlt sich, wenn das Anspringen des Devulkanisationsverfahrens mit der Gesamtmenge zögerlich erfolgt.
Für eine schrittweise Aufgabe des zu devulkanisierenden Materials sind modulweise aufgebaute Planetwalzenextuder.
Dann kann ein Planetwalzenextrudermodul mit der Materialzuführung an jeder gewünschten Stelle angeordnet werden. Dabei muß die gewünschte Stelle bzw. die weiteren Stellen für die Materialzuführung nicht vorausberechnet werden. Es ist auch möglich auf empirischem Wege durch Anordnung der Materialzuführung im zweiten oder dritten Planetwalzenextrudermodul die richtige Stelle zu finden. Das geschieht dann durch Anordnung des mit der weiteren Materialzuführung versehenen Planetwalzenextrudermoduls als zweiter und/oder dritter und/oder vierter Modul.

Wahlweise wird der Planetwalzenextrudermodul in mehrfacher Ausführung oder in Kombination mit einer oder mehreren nach Art eines Doppelschneckenextruders ausgebildeten Fülleinrichtung oder mit einer herkömmlichen Fülleinrichtungen eingesetzt, das einem Einschneckenextruder nachgebildet ist und zum Beispiel mit einem Einfülltrichter versehen ist Auf dem Wege können auch Materialien verarbeitet werden, die nicht gemeinsam in Mischung gebracht werden dürfen bzw. nacheinander und ggfs. in zeitlichem Abstand in Mischung gebracht werden müssen. Außerdem können schwierig zu verarbeitende Materialien, zum Beispiel Feststoffe mit einer Neigung zum Kleben und Anbacken oder Feststoffe, die zur Entmischung neigen, spätest möglich in die Mischung gebracht werden.
Auf dem erfindungsgemäßen Wege können Feststoffe miteinander und wahlweise auch mit Flüssigkeiten oder mit Schmelzen in Mischung gebracht werden.
Zumeist ist dabei eine genaue Dosierung von Vorteil. Die Dosierung kann volumetrisch oder gravimetrisch erfolgen.
Die Feststoffe können drucklos oder mit einem Stopfwerk zwangsweise in den Extruder getragen werden.
Die Planetspindeln können unter obigen Voraussetzungen ganz oder teilweise mit einer von der Normalverzahnung gebildet werden bzw. mit anders ausgebildeten Planetspindeln kombiniert werden.
Für temperaturempfindliche Materialien kann eine Temperierung des Anschlusses und/oder anderer Zuführungsteile wie des Einlauftrichters vorgesehen sein.
Die erfindungsgemäße Technik kann zum Beispiel Vorteil haben beim Einsatz des Extruders in chemischen Prozessen, in der Lebensmittelindustrie oder Kunststoffindustrie.

Die Anwendung der beschriebenen Füllteile hat über die Aufbereitung von Altgummi hinaus auch für verschiedene andere Materialien Vorteile. Dazu gehören unter anderem Elastomere, Polyurethane, Klebstoffen, Kaugummi.

Dazu können auch feinkörnige, sogar staubförmige Materialien mit Eintragsschwierigkeiten gehören.

Die Elastomere und vergleichbare Stoffe haben in der Wirtschaft/Technik eine erhebliche Bedeutung. Überall, wo Kunststoff eine besonders starke Verformung erfahren sollen und nach einer Entlastung gleichwohl wieder die ursprüngliche Form einnehmen sollen, wird über Elastomere (Elaste) und dergleichen gummielastische Kunststoffe (Kautschuk) nachgedacht. Kunststoffe bestehen aus großen Molekülketten. Die hohe Elastizität der Elastomere wird durch ein Phänomen im Verhalten der Molekülketten gegeben. Bei einer Zugbelastung der ursprünglich im Knäuel liegenden Molekülketten ordnen sich die Molekülketten anders, vorzugsweise parallel, und dehnen sich die Molekülketten.
Für die gewünschte Verformung ist allerdings auch Voraussetzung, dass die Molekülketten nicht aneinander gleiten. Das wird durch eine Vernetzung der Molekülketten erreicht. Durch das Maß der Vernetzung wird die Verformung beeinflußt. Bei geringer Vernetzung entsteht ein weicher Kunststoff. Bei starker Vernetzung entsteht ein harter Kunststoff.
Es kommen unterschiedliche Vernetzungsmittel vor. In Abhängigkeit von dem Kunststoff findet eine Auswahl der Vernetzungsmittel statt. Schwefel gehört zu den häufig angewendeten Vernetzungsmittel. Schwefel tritt bei entsprechender Erwärmung des Kunststoffes als Vernetzungsmittel in Wirkung. Bei anderen Vernetzungsmitteln kommt es auf Wärmewirkung nicht an oder kann die Wirkung des Vernetzungsmittels auch von anderen Umständen abhängen.
Zu den Elastomeren gehören zum Beispiel
Acrylnitril-Butadien-Kautschuk (NBR)
Acrylnitril/Butadien/Acrylat (A/B/A)
Acrylnitril/chloriertes Polethylen/Styrol (A/PE-C/S)
Acrylnitril/Methylmethacrylat (A/MMA)
Butadien-Kautschuk (BR)
Butylkautschuk (HR) (IIR
Chloropren-Kautschuk (CR)
Ethylen-Ehylacrylat-Copolymer (E/EA)
Ethylen-Propylen-Copolymer (EPM)
Ethylen-Propylen-Dien-Kautschuk (EPDM)
Ethylenvinylacetat (EVA)
Fluorkautschuk (FPM oder FKM)
Isopren-Kautschuk (IR)
Naturkautschuk (NR)
Polybutadienkautschuk BR
Polyethylenharze
Polyisobutylen (PIB)
Polspropylenharze
Polyvinylbutyral (PVB)
Silicon-Kautschuk (Q oder SIR)
Styrol-Isopren-Styrol-Blockcopolymer (SIS)
Styrol-Butadien-Kautschuk (SBR)
Styrol-Butadien-Styrol (SBS)
Thermoplastisches Polyurethan (TPU oder TPE-U)
Vinylchlorid/Ethylen (VC/E)
Vinylchlorid/Ethylen/Methacrylat (VC/E/MA)
Bei Elastomeren ist die Gefahr des Verklebens und Anbackens besonders groß, wenn Vernetzungsmittel zusammen mit anderem Material über das Füllteil eingezogen werden, die auf Erwärmung ansprechen. Solche Elastomere sind zum Beispiel aus der DE60124269, DE 3738335 bekannt. Dann führt jedes Kleben und Anbacken zu unvorhergesehener Erwärmung zum unvorhergesehenen Beginn der Vernetzung und zu einer schlechteren Materialbeschaffenheit. Mit dem beschriebenen Füllteil können die durch Kleben und Anbacken im Füllteil zu befürchtenden Schwierigkeiten vermieden werden.

Bei Polyurethanen kommt es auf die Zusammenführung zweier Reaktionskomponenten im richtigen Verhältnis an. Es ist bekannt, die Reaktionskomponenten mit Hilfe eines Extruders zusammen zu führen. Das ist zum Beispiel beschrieben in DD 141975, DE 1964834, US 3233025, DE 2059570, DE 2447368. Geringe Unregelmäßigkeit in der Materialführung beeinträchtigen bereits die Mischung. Auch das kann mit dem beschriebenen Füllteil im Einzugsbereich vermieden werden.

Die Verarbeitung von Klebstoffen im Extruder ist zum Beispiel beschrieben in EP 1167017.
Durch Verwendung des beschriebenen Füllteiles kann die Klebstoffverarbeitung im Extruder wesentlich erleichtert werden.

Die Verarbeitung von Kaugummi im Extruder ist bekannt. In der wärmempfindlichen Grundmischung finden sich Lecithin, Weichmacher, Sirup, Zucker, Öle, Duftstoffe und Elastomere. Darunter sind stark klebende und zur Anbackung neigende Bestandteile.

Entsprechende Hinweise finden sich in der DE 69829695, US 5135760, US 5045325, US 4555366. Auch diese Herstellung wird mit dem beschriebenen Füllteil wesentlich erleichtert.

Wahlweise wird der Planetwalzenextrudermodul in mehrfacher Ausführung oder in Kombination mit einem herkömmlichen Füllteil eingesetzt, das einem Einschneckenextruder nachgebildet ist und zum Beispiel mit einem Einfülltrichter versehen ist. Auf dem Wege kann Material an verschiedenen Stellen zugeführt werden. Damit können auch Materialien verarbeitet werden, die nicht gemeinsam in Mischung gebracht werden dürfen bzw. nacheinander und ggfs. in zeitlichem Abstand in Mischung gebracht werden müssen. Außerdem können schwierig zu verarbeitende Materialien, zum Beispiel Feststoffe mit einer Neigung zum Kleben und Anbacken oder Feststoffe, die zur Entmischung neigen, spätest möglich in die Mischung gebracht werden.
Auf dem erfindungsgemäßen Wege können Feststoffe miteinander und wahlweise auch mit Flüssigkeiten oder mit Schmelzen in Mischung gebracht werden.
Zumeist ist dabei eine genaue Dosierung von Vorteil. Die Dosierung kann volumetrisch oder gravimetrisch erfolgen. Die Feststoffe können drucklos oder mit einem Stopfwerk zwangsweise in den Extruder getragen werden.
In der Zeichnung ist eine Extrusionsanlage für ein Verfahren für die Anwendung auf Altgummi dargestellt.
Bei der Extrusionsanlage handelt es sich nach Fig. 1 um eine 70iger Baugröße. Die in der DE102015010460 beschriebene Anlage besteht aus verschiedenen Abschnitten 2,3a,3b,4,5,6. Der Abschnitt 2 ist ein Füllteil und nach Art eines Einschneckenextruders ausgebildet.
Die Abschnitte 3a,3b,4,5,6 sind Planetwalzenmodule. Zu den verschiedenen Planetwalzenmodulen gehören innen verzahnte zylindrische Gehäuse, nicht dargestellte Planetspindeln und eine nicht dargestellte Zentralspindel. Hier ist für alle Planetwalzenmodule und für das Füllteil eine gemeinsame Zentralspindel vorgesehen. Das heißt, die Zentralspindel erstreckt sich durch alle Planetwalzenmodule und durch das Füllteil 2 zum Getriebe 1 hin. Das Getriebe wird durch einen Antriebsmotor bewegt. Infolgedessen dreht sich die Zentralspindel in dem Extruder. Die mit der Zentralspindel kämmenden Planetspindeln laufen dabei um die Zentralspindel herum und kämmen mit dem innen verzahnten Gehäuse der Planetwalzenmodulen. Die Planetwalzenmodulen 4,5 und 6 haben eine Länge von jeweils 400 mm. Die Planetwlazenmodulen 3a und 3b besitzen eine Länge von jeweils 200mm.
In allen Planetwalzenmodulen sind jeweils fünf Planetspindeln vorgesehen. Die Zahl der Planetspindeln hat Einfluß auf den Füllungsgrad der Planetwalzenmoduln. Je geringer die Zahl der Planetspindeln ist, desto größere Hohlräume können erzeugt werden. Die Planetspindeln der Module 4 und 5 sind als Noppenspindeln ausgebildet und gleichmäßig verteilt am Umfang der Zentralspindel angeordnet. Von den Planetspindeln des Moduls 6 sind drei Planetspindeln gleichfalls als Noppenspindeln ausgebildet. Die übrigen Planetspindeln des Moduls 6 sind als Transportspindeln ausgebildet. Die Planetwalzenmoduln 3a und 3b besitzen mehr Planetspindeln als die anderen Planetwalzenmoduln, nämlich sechs. Außerdem sind die Planetspindeln der Moduln 3a und 3b mit einer Standardverzahnung versehen. Die Standardverzahnung verursacht eine stärke mechanische Belastung des Altgummis als die in den anderen Moduln vorgesehenen Planetspindeln, deren Noppenspindeln dem Entgasen sehr förderlich sind und deren Transportspindeln sowohl dem Entgasen förderlich sind, als auch eine erhebliche Förderwirkung entfalten. Bei der Standardverzahnung findet ein sehr starkes Auswalzen des Altgummis zu dünnen Schichten statt. Das intensiviert den Wärmefluß.

Von Planetspindeln in den Planetwalzenmodulen 4,5,6 besitzen jeweils drei Noppenspindeln die gleiche Länge von 373 mm. Die übrigen Planetspindeln sind dagegen länger. Sie besitzen eine Länge von 399mm. Die unterschiedlich langen Planetspindeln sind für das Einziehen des Altgummis in den Wirkungsbereich aller Spindeln von Vorteil.
Planetwalzenmodul 3a und 3b sind dagegen drei Planetspindeln mit dieser Länge vorgesehen. Die übrigen drei Planetspindeln besitzen eine kürzere Länge von 373 mm.

Alle Planetspindeln gleiten in nicht dargestellter Weise an üblichen Anlaufringen. Die Anlaufringe sind im Ausführungsbeispiel in nicht dargestellter Weise mit Dispergierringen verbunden.
Der Dispergierring für den Modul 3a ist mit 19 bezeichnet,
der Dispergierring für den Modul 3b mit 20,
der Dispergierring für den Modul 4 mit 21,
der Dispergierring für den Modul 5 mit 22.
Außerdem ist auch am letzten Modul 6 noch ein Dispergierring 36 vorgesehen.

Die Module 3b, 5,6 sind mit einer Entgasung 30, 32, 35 versehen. Die Entgasung wird durch Seitenarmextruder gebildet, die entgegen der Darstellung der Zeichnung senkrecht auf den zugehörigen Modulen stehen.
Dabei hat
der Seitenarmextruder 30 geringen Abstand vom Dispergierring 19,
der Seitenarmextruder 32 geringen Abstand vom Dispergierring 21,
der Seitenarmextruder 35 geringen Abstand vom Dispergierring 22.
An den Seitenarmtextrudern liegt jeweils Unterdruck an. Während der Entgasung werden die Seitenarmextruder leer gefahren, so dass Einsatzmaterial/Behandlungsgut, welches im Extruder unter Druck steht bzw. geneigt ist, mit abgezogenem Gas auszutreten, wieder in den Extruder zurückgedrängt.

Das Altgummi wird im Ausführungsbeispiel feinkörnig in das Füllteil 2 eindosiert. Die Dosierung ist mit 7 bezeichnet, der Materialeintritt mit 40. Am Materialeintritt ist darüber hinaus eine Öffnung 41 vorgesehen, durch die bei Betriebsstillstand verbliebenes Material ausgeblasen werden kann.

Die Planetwalzenmodule 3, 4 ,5 werden mit Ölkühlern 10a, 10b, 11,12, 13 während des Devulkanisierungsbetriebes temperiert.
Das Füllteil besitzt eine Temperierung 14.
Ferner ist eine Temperierung 15 für die nicht dargestellte Zentralspindel vorgesehen

Beim Anfahren wird zunächst Öl über eine Pumpe 45 in das Füllteil eingetragen, bevor das Füllteil mit Altgummi beschickt wird. Das verhindert ein Trockenlaufen der bewegten Extruderteile.

Nach dem Eintragen des Altgummis in das Füllteil 2 erfährt das Altgummi durch die Schnecke des Füllteiles eine mechanische Verformung und Belastung. Zugleich erfährt das Altgummi eine Erwärmung. Dazu ist das Temperierungsmittel der Temperierung 15 zum Beispiel auf eine Temperatur von 120 Grad Celsius eingestellt. In anderen Beispielen wird mit geringerer oder höherer Temperatur gearbeitet. Vorzugsweise ist die Temperierung 15 bis auf 140 Grad Celsius einstellbar.
Das Altgummi wird aus dem Füllteil 2 in den Modul 3a gedrückt, der eine Aufwärmzone bildet. In der Aufwärmezone findet eine Aufwärmung des Altgummis auf eine materialabhängige Starttemperatur für eine Devulkanisierung statt. Die Starttemperatur beträgt im Beispiel 310 Grad Celsius. Dazu ist die Temperierung 10a des Moduls 3a im Beispiel auf 330 Grad Celsius eingestellt. Zugleich findet eine intensive Mischung und Auswalzung des Altgummis im Modul 3a statt.

Nach der Aufwärmung des Altgummis auf Starttemperatur wird das Altgummi durch den Spalt am Dispergierungsring 19 gedrückt. Nach Passieren des Dispierungsringes 19 sind die Molekülketten des Altgummis soweit aufgebrochen, dass Schwefel aus dem Einsatzmaterial/Behandlungsgut entweichen kann. Das Entweichen des Schwefels wird dadurch gefördert, dass das Einsatzmaterial/Behandlungsgut in dem Modul3b intensiv gemischt und ausgewalzt wird. Zugleich wird frei werdender, gasförmiger Schwefel über die Entgasung 30 abgesaugt.
In dem Modul 3b wird die Devulkanisation des Einsatzmaterials gestartet.

Um eine ausreichende Devulkanisation zu erreichen, muß die Bearbeitung noch weiter fortgesetzt werden.

Aus dem Modul 3b wird das Einsatzmaterial/Behandlungsgut in den Modul 4 gedrückt. Dabei passiert das Einsazmaterial/Behandlungsgut den Dispergierungsring 20. In dem Modul 4 wird das
Einsatzmaterial/Behandlungsgut weiter behandelt und durch einen weiteren Dispiergierring 21 gedrückt. Das so bearbeitete Material wird in dem Modul 5 weiter bearbeitet und entgast.

Nach dem Austritt aus dem Planetwalzenmodul 5 wird das devulkanisierte Altgummi in dem Planetwalzenmodul 6 auf 220 Grad Celsius gekühlt, bevor es in krümeliger Form aus der Extrusionsanlage austritt und in einer Wasserkühlung 16 auf Raumtemperatur abgekühlt wird.
Für die Kühlung ist ein Wasserkühler 13 an dem Planetwalzenmodul 6 vorgesehen.
Auch das Füllteil 2 ist mit einem Wasserkühler 14 versehen.
Auch die Kühltemperaturen am Füllteil und nach der Devulkanisierung sind materialabhängig.

Im Ausführungsbeispiel ist überdies eine Innenkühlung der Zentralspindel vorgesehen. Der zugehörige Kühler 15 ist wie die Kühler 10,11,12 ein Ölkühler und auf eine Temperatur von 300 Grad Celsius eingestellt.

Die Devulkanisierung wird durch die mechanische und die thermische Belastung des Altgummis in der Extrusionsanlage bewirkt.

Zur mechanischen Belastung in den Planetwalzenmodulen 3,4,5 tragen auch die Dispergierringe 20, 21, 22 bei.
Im Ausführungsbeispiel sind die Dispergierringe in Förderrichtung des Altgummis durch die Anlage hinter den nicht dargestellten Anlaufringen angeordnet.
Dabei ist der Innendurchmesser der Dispergierringe 20,21,22 kleiner als der Außendurchmesser der Zentralspindel. Die Dispergierringe 20,21,22 greifen in nicht dargestellte Nuten in der Zentralspindel, so dass die Zahnlücken zwischen den Zähnen der Zentralspindel bis auf einen engen Spalt am Zahngrund geschlossen sind. Die Dispergierringe 20,21,22 sind im Übrigen zwischen den korrespondierden Enden der Planetwalzenmodule gehalten, so dass auch der die Zentralspindel umgebende Gehäuseraum geschlossen ist und das Altgummi gezwungen ist, durch den engen Spalt zu dringen. Die Verengung des Spaltes ist materialabhängig und bewirkt eine extreme Verformung und extreme mechanische Belastung des Einsatzmaterials.

Im einzelnen ist der Dispergierring 20 zwischen den Planetwalzenmoduln 3 und 4 , der Dispergierring 21 zwischen den Planetwalzenmodulen 4 und 5 und der Dispergierring 22 zwischen den Planetwalzenmodulen 5 und 6 vorgesehen.

Die Einspannung der Dispergierringe 20,21,22 erfolgt beim Verspannen der zylindrischen Gehäuse der Planetwalzenmodule 3,4,5,6 .
Die Planetwalzenmodule 3,4,5,6 besitzen dazu an ihren Enden übliche Flansche, die mit Spannschrauben gegeneinander gezogen werden. Auch das Füllteil 2 besitzt übliche Flansche, Mit diesen Flanschen ist das Füllteil einerseits an dem Gehäuse des Antriebs 1 verspannt und andererseits mit dem Planetwalzenmodul 3.

Für die im Ausführungsbeispiel in Nuten der Zentralspindel greifenden Dispergierringen 20,21,22 ist vorgesehen, dass diese Ringe sich aus zwei Hälften zusammensetzen, um die Montage zu erleichtern.
Die Montage ist nachfolgend am Dispergierring 20 erläutert. Die Montage der übrigen Dispergierringe 20,21, 22 erfolgt entsprechend.

Nach der Montage des Füllteilgehäuses wird zunächst die Zentralspindel mit ihrem als Einschnecke ausgebildeten Ende in das Füllteilgehäuse geschoben und mit dem Antrieb gekoppelt.
Anschließend wird das Gehäuse des Planetwalzenmoduls 3 über die Zentralspindel geschoben und mit dem Füllteilgehäuse verspannt.
Es folgt die Positionierung der Planetspindeln des Planetwalzenmoduls 3. Dazu werden die Planetspindeln drehend in ihre vorgesehene Position zwischen Gehäuse und Zentralspindel geschoben. Die Position der Planetspindeln ist durch gleichmäßige Verteilung am Umfang der Zentralspindel und den schon beschriebenen Verzahnungseingriff der Planetspindeln mit der Innenverzahnung des Gehäuses und der Außerverzahnung der Zentralspindel gekennzeichnet.
Nach der Positionierung der Planetspindeln wird der Anlaufring für die Planetspindeln über die Zentralspindel und in eine zentrische Öffnung des Gehäuseendes des Planetwalzenmoduls geschoben. Der Anlaufring trägt im Berührungsbereich mit den Planetspindeln eine Hartmetallschicht als Verschleißschutz.
Nach Positionierung des Anlaufringes wird der aus zwei Hälften bestehende Dispergierring 20 an dem Anlaufring zur Anlage gebracht. Dabei werden die Hälften zugleich in eine Nut der Zentralspindel geschoben. Die Zentrierung des Dispergierringes erfolgt dann mit Hilfe eines einteiligen Stützringes, der über die Zentralspindel geschoben werden kann und seinerseits in der gleichen Gehäuseöffnung wie der Anlaufring eine Zentrierung im Planetwalzenmodul 3findet. Der Stützring ist zugleich so bemessen, dass er aus dem Ende der Gehäuseöffnung des Planetwalzenmoduls 3 herausragt und eine Zentrierung für das nachfolgend zu montierende Gehäuse des Planetwalzenmoduls 4 bildet. Das Gehäuse des Planetwalzenmoduls 4 wird dabei mit dem Gehäuse des Planetwalzenmoduls 3 in der oben beschriebenen Form verspannt. Diese Verspannung bewirkt zugleich eine Verspannung des Anlaufringes, des Dispergierringes und des Stützringes.

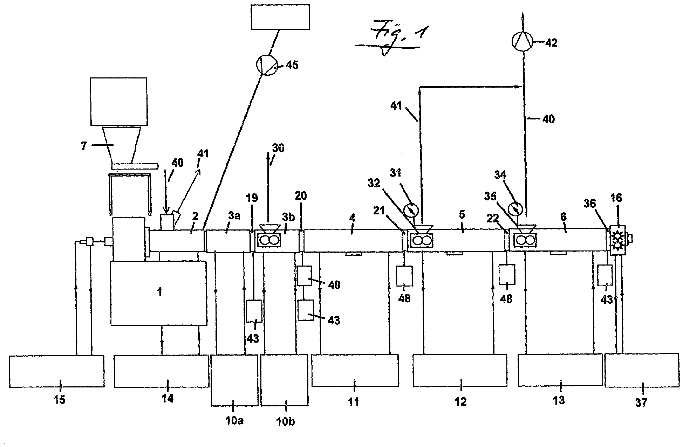

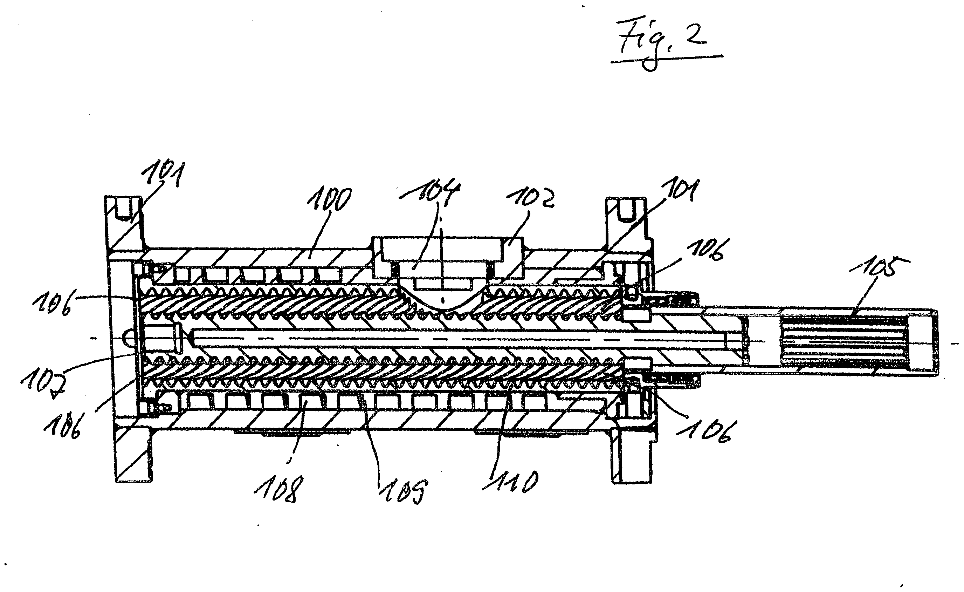

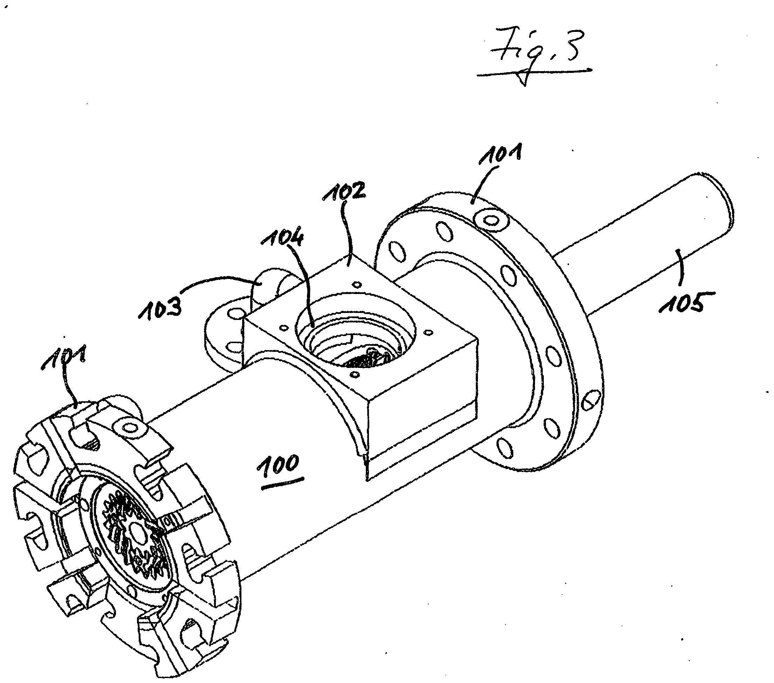

Nach Fig. 2 und 3 ist der Einzug 2 als Planetwalzenextrudermodul ausgebildet. Zu dem Planetwalzenextrudermodul gehört ein Gehäuse 100, welches an jedem Ende mit einem Flansch 101 versehen ist. Außerdem besitzt das Gehäuse eine Buchse 109, welche mit einer Innenverzahnung 110 versehen ist. Außen sind die Buchse Kühl/Heizkanäle 108 eingearbeitet. In dem montierten Zustand sind die Heiz/Kühlkanäle 108 außen durch das Gehäuse geschlossen. An den Enden der Heiz/Kühlkanäle 108 sind Zuleitungen/Ableitungen für ein Temperierungsmittel vorgesehen. In Fig. 3 ist von den beiden Zuleitungen/Ableitungen ein Anschluß 103 dargestellt.

Mittig in dem Gehäuse 100 ist eine Zentralspindel 107 angeordnet. Antriebsseitig ist die Zentralspindel 107 als Vielkeilwelle 105 ausgebildet, um mit einem Getriebemotor zu korrespondieren.

Zwischen der Innenverzahnung 110 und der Zentralspindel 107 sind Planetspindeln 106 vorgesehen. Die Planetspindeln 106 kämmen mit der Verzahnung der Zentralspindel 107 und der Innenverzahnung 110.

Im Ausführungsbeispiel ist ein Teil der Planetspindeln mit einer Normal/Standardverzahnung wie die Zentralspindel und die Buchse 109 versehen. Der übrigen Planetspindeln sind als Transportspindel ausgebildet, wobei die Transportspindeln entgegen der Förderrichtung des Füllteiles über dessen Einlauföffnung 104 hinausragen und wobei jede Transportspindel an beiden Enden mit einer Normalverzahnung versehen ist, die den Halt der Transportspindeln in der Verzahnung der Zentralspindel und in der Innenverzahnung des Gehäuses erhöht.

Überdies ist oben auf dem Gehäuse 100 ein Flansch 102 mit einer Einlauföffnung 104 für den zur Devulkanisation bestimmten Altgummi vorgesehen. An dem Flansch 102 wird nicht dargestelltes Stopfwerk befestigt, welches nach Art eines Doppelschneckenextruders ausgebildet ist und die zu devulkanisierenden Partikel in das Füllteil drückt. Im Ausführungsbeispiel ist keine zusätzliche Temperierung des Flansches vorgesehen. In anderen Ausführungsbeispielen ist eine nicht dargestellte zusätzliche Temperierung des Flansches vorgesehen.

Fig. 4 zeigt den Einzug mit einem geöffneten Mantel 100, so dass der Blick auf die Planetspindeln 106 frei ist.

Das Altgummi tritt zwischen die Transportspindeln 106 und wird von den Transportspindeln erfaßt und extrem schonend in Mischung gebracht und in Richtung der anderen Planetwalzenextruderabschnitte/Module gefördert, um dort weiter bearbeitet zu werden.

Fig. 5 und 6 zeigen ein weiteres Ausführungsbeispiel.

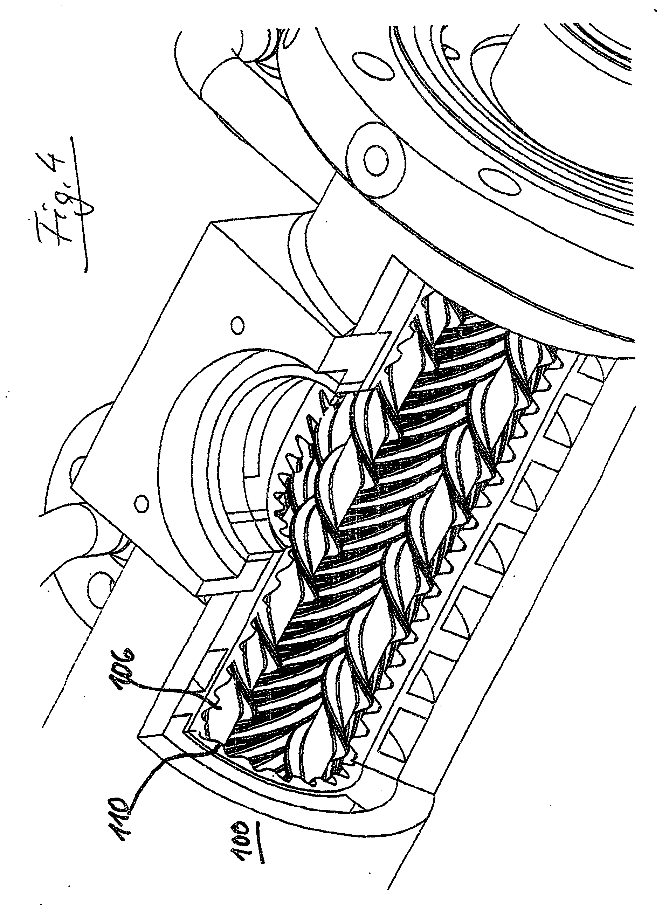

Das weitere Ausführungsbeispiel unterscheidet sich durch einen anderen Gehäusemantel 119. Der Gehäusemantel 119 besitzt auch eine Einlauföffnung 120 für Einsatzmaterial. Darüber hinaus ist der Gehäusemantel 119 mit einer Innenverzahnung 121 versehen, die wie die Innenverzahnung mit den Planetspindeln 106 zusammen zu wirken. Im Unterschied zur Gehäuseinnenverzahnung nach Fig. 2 bis 4 ist die Verzahnung i aber in dem sich an die Einlauföffnung 120 anschließenden und in Umlaufrichtung der Zentralspindel erstreckenden Bereich 122 abgeflacht. Die Umlaufrichtung der Zentralspindel verläuft in der Darstellung im Uhrzeigersinn.
An dem der Einlauföffnung benachbarten Ende sind die Zähne um ¾ ihrer Höhe durch die Abflachung verringert. Diese Abflachung 133 nimmt im Ausführungsbeispiel in Umlaufrichtung der Zentralspindel ab. Dabei erstreckt sich die Abflachung 133 im Ausführungsbeispiel über 1/10 des Umfanges des zu der Gehäuseinnenverzahnung gehörenden Teilkreises. In anderen Ausführungsbeispielen kann sich der Bereich über mindestens ¼ des Umfanges des Teilkreises oder mindestens ½ des Umfanges des Teilkreises oder mindestens % des Umfanges des Teilkreises erstrecken. Dabei wird das Erstreckungsmaß des Bereiches 122 von dem Punkt aus bestimmt, in dem sich der Bereich 122 mit einem Schnitt durch die Mitte der im Querschnitt kreisförmigen Einlauföffnung an die Einlauföffnung anschließt.

Die Erstreckungsrichtung des Bereiches 122 verläuft allein in Umfangsrichtung. In anderen Ausführungsbeispielen kann die dargestellte Erstreckungsrichtung auch in Umfangsrichtung und zugleich geneigt zur Längsrichtung des Gehäuses verlaufen.

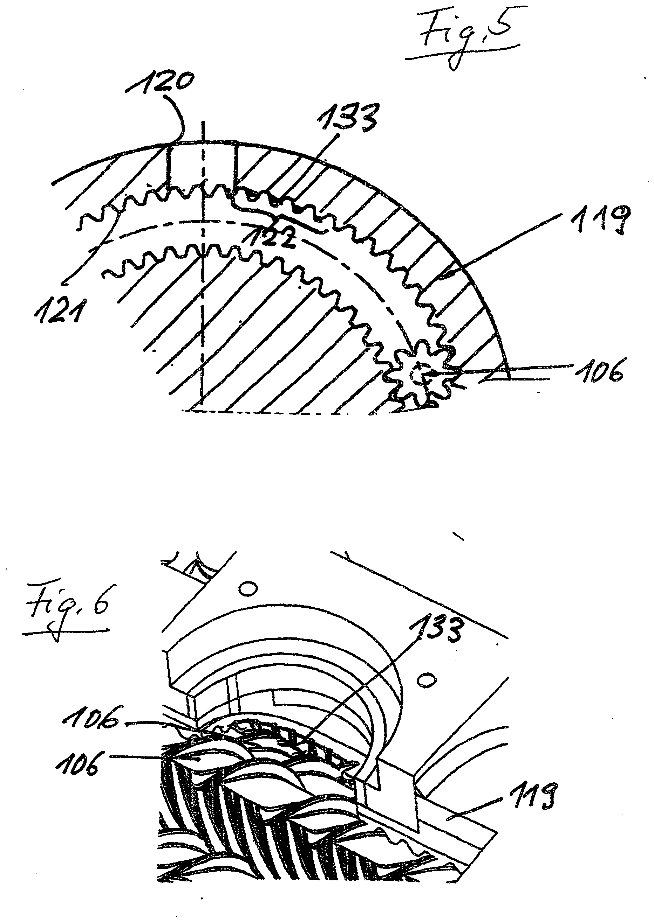

Die Abflachung 133 kann sich im Ausführungsbeispiel über die gesamte Öffnungsweite der Einlauföffnung erstreckt. In anderen Ausführungsbeispielen erstreckt sich die Abflachung 133 über höchstens 90% der Öffnungsweite der Einlauföffnung, in noch weiteren Ausführungsbeispielen über höchstens 80% der Öffnungsweite der Einlauföffnung und noch anderen Ausführungsbeispielen über höchstens 70% der Öffnungsweite der Einlauföffnung.
Die Abflachung 133 kann sich bei Bedarf in der in Fig. 5 dargestellten Breite in noch weiteren Ausführungen auch über die Öffnungsweite der Einlauföffnung hinaus erstrecken, zum Beispiel um höchstens weitere 10% der Öffnungsweite oder um höchstens weitere 20% der Öffnungsweite oder um höchstens 30% der Öffnungsweite.

Die in Fig. 5 und 6 gezeigte Abflachung bildet einen Einlauftrichter, der den Einzug des Einsatzmaterials in die Extrusionsanlage erleichtert.

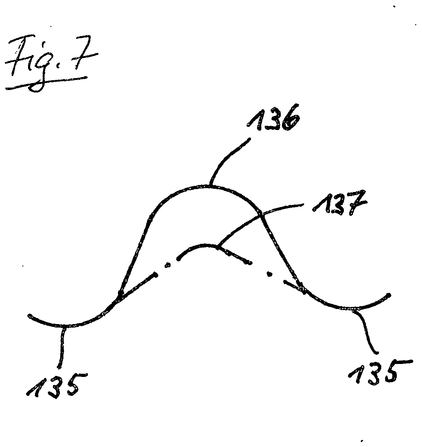

Fig. 7 zeigt einen ursprünglichen Zahn 136 zwischen Zahnlücken 135. Die Darstellung beinhaltet einen Ausschnitt einer Gehäuseinnenverzahnung. Dabei ist ein strich-punktiert dargestellter Zahn 137 mit geringerer Höhe, rundem Kopf und Zahnflanken gezeigt, die zum Teilkreisdurchmesser der Gehäuseinnenverzahnung eine geringere Neigung aufweisen als die Zahnflanken des ursprünglichen Zahnes 136. Diese Kontur ist im Ausführungsbeispiel durch Funkenerosion hergestellt worden. In anderen Ausführungsbeispielen ist die Kontur durch Fräsen hergestellt worden.

Der Einlauftrichter ist im Ausführungsbeispiel mit einer zentrischen Materialzuführung nach Fig. 2 bis 4 kombiniert.

In anderen Ausführungsbeispielen ist der Einlauftrichter mit einer exzentrischen Materialzuführung kombiniert.

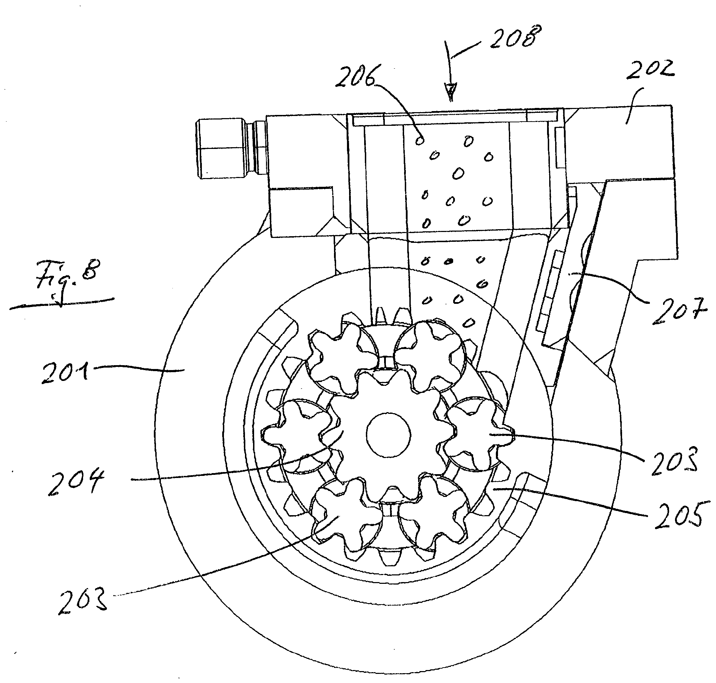

Fig. 8 zeigt einen Querschnitt durch einen Planetwalzenextruderabschnitt mit einer exzentrischen Feststoffzuführung 202. Der Querschnitt zeigt ein Gehäuse 201 mit einer Innenverzahnung 205. In dem Gehäuse 201 laufen eine Zentralspindel 204 und Planetspindeln 203 um.
Die Partikel/Materialzuführung 202 besitzt einen nicht dargestellten Trichter mit einem zylindrischen Einlauf, der an das Gehäuse 201 angeflanscht ist. Der Trichter mit dem zylindrischen Einlauf ist in Bezug auf die Mitte der Zentralspindel 204 exzentrisch angeordnet. Das heißt, die Mittelachse 208 der Zuführung 202 verläuft im Abstand an der Mittelachse der Zentralspindel vorbei. Der Abstand beider Achsen ist im Ausführungsbeispiel etwas größer als ein Viertel des Teilkreisdurchmessers der Gehäuseinnenverzahnung 205, aber wesentlich kleiner als der halbe Teilkreisdurchmesser der Gehäuseinnenverzahnung 205.
Infolgedessen weist die Mittelachse 208 der Zuführung 202 in einen Bereich der Bewegungsbahn der Planetspindeln 203, in dem die Planetspindeln 203 sich nach Erreichen der Höchststellung in der Ansicht nach Fig. 8 deutlich abwärts bewegen. Auf dem Wege wird das Material sehr viel besser in den Planetwalzenextrudermodul eingezogen als bei der herkömmlicher Anordnung der Materialzuführung über dem Planetwalzenextrudermodul, bei der die Mittelachse der Zuführung senkrecht auf der Mittelachse des Planetwalzenextrudermoduls steht. Das Material ist in der Ansicht nach Fig. 8 schematisch mit Partikeln 206 dargestellt.

Infolge entsprechend großen Durchmessers steht die Zuführung 202 bei der erfindungsgemäßen exzentrischen Anordnung in der senkrechten Projektion auf eine horizontale Ebene, in der die Mittelachse des Planetwalzenextrudermoduls liegt, deutlich vor. Um gleichwohl die Altgummipartikel 206 gut in den Planetwalzenextrudermodul zu lenken, ist ein sich verjüngender Übergang 207 von der Materialzuführung in den Planetwalzenextrudermodul vorgesehen. Im Ausführungsbeispiel bildet der Übergang eine Schräge. Die Schräge verläuft unter einem Winkel von 60 Grad zur Horizontalen.

Vorteilhafterweise arbeitet der exzentrische Einlauf nach Fig. 8 so gut, dass auch ein druckloser Eintrag von Altgummipartikel in das Füllteil möglich ist. Drucklos heißt, dass die Partikel nur aufgrund ihres Gewichtes aus einem über der Einlauföffnung angeordneten Trichter in den Einlauf gelangen.

In anderen Ausführungsbeispielen ist der exzentrische Einlauf mit einem Stopfwerk kombiniert, um einen größeren Altgummipartikel-Eintrag zu sichern.

## Patentansprüche

1. Verfahren zum Devulkanisieren von vernetzten Gummi und vernetzten Elastomeren, deren Molekülketten durch mechanische und thermische Belastung bis auf die Kohlenwasserstoffmoleküle zerstörbar sind, wobei das zu devulkanisierende Material als Partikel über ein Füllteil in einen Extruder gedrückt werden und unter Erwärmung solange und so intensiv verformt werden, bis eine gewünschte Zerkleinerung der Molekülketten entstanden ist,
wobei die mechanische und thermische Bearbeitung in einem Planetwalzenwextruder erfolgt,
wobei der Planetwalzenextruder aus einem Gehäuse, Planetspindeln und einer Zentralspindel besteht und die Zentralspindel mit den Planetspindeln kämmt und die Planetspindeln mit einer Innenverzahnung des Gehäuses oder der Innenverzahnung einer im Gehäuse vorgesehenen Buchse kämmt, so dass eine Drehung der Zentralspindel ein Umlaufen der Planetspindeln um die Zentralspindel im Gehäuse bewirkt, wobei die Planetspindeln eines Extruderabschnittes mit einer Stirnfläche an einem Anlaufring dieses Extruderabschnittes gleiten,
**dadurch gekennzeichnet,**
**dass** als Füllteil ein Planetwalzenextruderabschnitt verwendet wird,
wobei die zu devulkanisierenden Partikel
a)exzentrisch zur Mitte des Planetwalzenextruderabschnitt zwischen die Planetspindeln (203) aufgegeben werden
b)wobei die Mittelachse (208) der Einfüllöffnung von der Mittelachse des Füllteiles einen Abstand aufweist.

2. Verfahren nach Anspruch 1, **gekennzeichnet durch** die Verwendung eines Füllteils mit einer Einfüllöffnung, deren Mitte (208) von der Mittelachse des als Planetwalzenextruderabschnitt ausgebildeten Füllteiles einen Abstand aufweist, der mindestens gleich einem Viertel des Teilkreisdurchmessers der Innenverzahnung (205)des Extrudergehäuses (201) oder einer innen verzahnten Buchse des Gehäuses ist.

3. Verfahren nach Anspruch 1 oder 2, **gekennzeichnet durch** Verwendung eines Extruders mit einem Abstand zwischen der Mitte (208) der Einlauföffnung und der Mittelachse des Planetwalzenextruderabschnitts, der kleiner als der halbe Teilkreisdurchmesser der Innenverzahnung (205) des Extrudergehäuses (201) oder einer innen verzahnten Buchse des Gehäuses ist.

4. Verfahren nach einem der Ansprüche 1 bis 3, **gekennzeichnet durch** die Verwendung eines Extruders mit einem Abstand zwischen der Mitte (208) der Einlauföffnung und der Mittelachse des Planetwalzenextruderabschnitts, der größer als der halbe Durchmesser des Fußkreises der Zentralspindelverzahnung und kleiner als der halbe Fußkreis der Innenverzahnung (205) des Extrudergehäuses (201) oder einer innen verzahnten Buchse des Gehäuse ist.

5. Verfahren nach einem der Ansprüche 1 bis 4, **gekennzeichnet durch** die Verwendung eines Extruders mit einer Materialzuführung, die am Übergang (207) zu dem Planetwalzenextrudergehäuse (201) eine Abschrägung aufweist, soweit die Materialzuführung gegenüber dem Extrudergehäuse vorragt.

6. Verfahren nach Anspruch 5, **gekennzeichnet durch** die Verwendung eines Extruders, dessen Schräge an der Materialzuführung in etwa auf einer Tangente an den Teilkreisdurchmesser der Innenverzahnung (205) des Gehäuses (201) oder einer innen verzahnten Buchse des Gehäuses liegt, wobei das Maß "in etwa" eine maximale Abweichung von der Tangente beinhaltet, die gleich dem Durchmesser der Planetspindeln (203), vorzugsweise gleich dem halben Durchmesser der Planetspindeln (203) und höchst bevorzugt gleich einem Viertel Durchmesser der Planetspindeln (203) ist, wobei die Schräge mit der Horizontalen durch die Extrudermitte einen Winkel von mindestens 30 Grad, vorzugsweise einen Winkel von mindestens 45 Grad und höchst bevorzugt von mindestens 60 Grad einschließt

7. Verfahren nach einem der Ansprüche 1 bis 6, **gekennzeichnet durch** die Verwendung eines Extruders, dessen Planetspindeln (203) im Einlaufbereich des Materials aus der Materialzuführung zumindest für drucklosen Materialeinzug zumindest teilweise als Transportspindeln ausgebildet sind und/oder
dessen Gehäuseinnenverzahnung (205) zur Bildung eines Einlauftrichters in der Verzahnung zumindest in dem Bereich abgeflacht ist, der sich an die Einlauföffnung des Gehäusemantels anschließt und sich in Umlaufrichtung der Zentralspindel erstreckt.

8. Verfahren nach Anspruch 7, **gekennzeichnet durch** die Verwendung eines Extruders, dessen Einlaufbereich die Ringfläche am Gehäusemantel ist, in der die Öffnung für den Materialeinlauf liegt, plus/minus einer Ringflächenbreitenabweichung von 50%, vorzugsweise von plus/minus 30% und noch weiter bevorzugt von plus/minus 10% einer Ringflächenbreitenabweichung.

9. Verfahren nach Anspruch 7 oder 8, **gekennzeichnet durch** die Verwendung eines Extruders mit Planetspindeln (203), die außerhalb des Bereiches der Verzahnungsabflachung mit einer Normalverzahnung und/oder einer Igelverzahnung und/oder einer Noppenverzahnung versehen sind.

10. Verfahren nach Anspruch 9, **gekennzeichnet durch** die Verwendung eines Extruders, wobei die mit einer Transportspindelverzahnung versehenen Planetspindeln (203) des Füllteiles zumindest an den Enden mit einer Normalverzahnung versehen sind.

11. *Verfahren* nach einem der Ansprüche 7 bis 10, ***gekennzeichnet durch** die Verwendung eines Extruders, wobei* die mit einer Transportspindelverzahnung im Füllteil *versehenen Planetspindeln* (203) mit anders verzahnten Planetspindeln kombiniert sind.

12. Verfahren nach Anspruch 11, **gekennzeichnet durch** die Verwendung eines Extruders, wobei der Anteil der Planetspindeln (203) mit Transportspindelverzahnung mindestens 50%, vorzugsweise mindestens 70% am Planetspindelbesatz des den Einzug bildenden Planetwalzenextruderabschnitts beträgt
und/oder
die Planetspindeln mit Transportspindelverzahnung gleichmäßig im Planetspindelbesatz verteilt sind.

13. Verfahren nach einem der Ansprüche 7 bis 12, **gekennzeichnet durch** die Verwendung eines Extruders mit einer Zahnabflachung im Einlaufbereich,
wobei die Zähne der Gehäuseinnenverzahnung maximal bis in den Zahngrund abgeflacht sind, vorzugsweise um maximal 90% der ursprünglichen Zahnhöhe abgeflacht worden sind, noch weiter bevorzugt um maximal 80% der ursprünglichen Zahnhöhe abgeflacht worden ist, wobei
die Abflachung mit zunehmendem Abstand von der Einlauföffnung abnimmt.

14. Verfahren nach einem der Ansprüche 7 bis 13, **gekennzeichnet durch** die Verwendung eines Extruders, wobei die Abflachung im Einlaufbereich sich mindestens über 1/10, vorzugsweise über mindestens 1/5, nach weiter bevorzugt über mindestens ½ und höchst bevorzugt über mindestens % des Umfanges des Teilkreises der Gehäuseinnenverzahnung (205) erstreckt.

15. Verfahren nach einem der Ansprüche 7 bis 14, **gekennzeichnet durch** die Verwendung eines Extruders, wobei
die abgeflachten Zähne mit Zahnflanken versehen sind, deren Neigung geringer ist, als die Zahnflanken der Zähne im nicht abgeflachten Bereich und/oder die abgeflachten Zähne oben mit einer Rundung versehen sind.

16. Verfahren nach einem der Ansprüche 1 bis 15, **gekennzeichnet durch** die Verwendung eines Extruders, wobei die Mittelachse (208) der Einlauföffnung den Teilkreisdurchmesser der Gehäuseinnenverzahnung (205) als Sekante schneidet oder als Tangente an dem Teilkreis der Gehäuseinnenverzahnung (205) verläuft oder im Abstand von dem Teilkreis der Gehäuseinnenverzahnung (205) verläuft, wobei der Abstand höchstens gleich der Dicke des Gehäusemantels ist.

17. Verfahren nach einem der Ansprüche 1 bis 16, **gekennzeichnet durch** die Verwendung eines Extruders mit einer Einlauföffnung, die infolge des Versatzes gegenüber dem Innenraum des Füllteiles vorragt und mit einer Schräge in die Wandung des Füllteiles übergeht, wobei die Schräge vorzugsweise einen Winkel bis 30 Grad, noch weiter bevorzugt einen Winkel bis 45 Grad und höchst bevorzugt einen Winkel bis 60 Grad zwischen sich und der Horizontalen einschließt.

18. Verfahren nach einem der Ansprüche 1 bis 17, **dadurch gekennzeichnet, dass** zur Erleichterung des Devulkanisierungsstartes zunächst nur eine Teilmenge des gewünschten Durchsatzes in den Extruder aufgegeben wird und nach Stabilisierung des Devulkanisierungsprozesses die Zugabemenge erhöht wird.

19. Verfahren nach Anspruch 18, **dadurch gekennzeichnet, dass** die schrittweise Zugabe der Partikel (206) über in Abständen angeordnete Einfüllöffnungen erfolgt.

20. Verfahren nach Anspruch 1 oder 19, **dadurch gekennzeichnet, dass** an mindestens einer nachgeordneten Einfüllöffnung eine zwangsweise Partikelzuführung mittels eines Stopfwerkes erfolgt.

21. Verfahren nach Anspruch 20, **dadurch gekennzeichnet, dass** ein Doppelschneckenextruder als Stopfwerk verwendet wird.

## Claims

1. Process for the devulcanisation of crosslinked rubber and crosslinked elastomers, the molecular chains of which are destructible as far as the hydrocarbon molecules by mechanical and thermal stress, wherein the particles of the material to be devulcanised are pressed through a feed part into an extruder and heated so long and so intensively deformed until there results a desired disintegration of the molecular chains,
wherein the mechanical and thermal processing occurs in a planetary roller extruder,
wherein the planetary roller extruder consists of a housing, planetary spindles and a central spindle, and the central spindle intermeshes with the planetary spindles and the planetary spindles intermesh with an internal toothing of the housing or with the internal toothing of a liner provided in the housing, such that one revolution of the central spindle causes the planetary spindles to rotate around the central spindle in the housing, wherein the planetary spindles of one extruder section slide with a facing surface at a stop ring of this extruder section, **characterised in that**
a planetary roller extruder section is used as the feed part, wherein the particles to be devulcanised
a) are added eccentrically to the centre of the planetary roller extruder module between the planetary spindles (203) and/or
b) wherein the central axis (208) of the feed opening is at a distance from the central axis of the feed part.

2. Process according to claim 1, **characterised by** the use of a feed part with a feed opening, whose centre (208) is offset from the central axis of the feed part designed as the planetary roller extruder section, wherein the offset is at least equal to a quarter of the pitch diameter of the inner toothing(205) of the extruder housing (201) or of the inner toothing of the lining of the housing.

3. Process according to claim 1 or 2, **characterised by** the use of an extruder with an offset between the centre (208) of the inlet opening and the central axis of the planetary roller extruder section, wherein the offset is smaller than half of the pitch diameter of the inner toothing(205) of the extruder housing (201) or of an inner toothed lining of the housing.

4. Process according to one of claims 1 to 3, **characterised by** the use of an extruder with an offset between the centre (208) of the inlet opening and the central axis of the planetary roller extruder section, wherein the offset is greater than half of the root diameter of the central spindle toothing and smaller than half the root diameter of the inner toothing(205) of the extruder housing (201) or of an inner toothed lining of the housing.

5. Process according to one of claims 1 to 4, **characterised by** the use of an extruder with a material feed that has a taper at the transition (207) to the planetary roller extruder housing (201), insofar as the material feed protrudes against the extruder housing.

6. Process according to claim 5, **characterised by** the use of an extruder, whose slope to the material feed lies approximately on a tangent to the pitch diameter of the inner toothing(205) on the housing (201) or on an inner toothed lining of the housing, wherein the extent of "approximately" includes a maximum deviation from the tangent which is equal to the diameter of the planetary spindles (203), preferably equal to half the diameter of the planetary spindles (203) and most preferably equal to a quarter of the diameter of the planetary spindles (203), wherein the slope with the horizontal through the centre of the extruder encloses an angle of at least 30°, preferably an angle of at least 45° and most preferably at least 60°.

7. Process according to one of claims 1 to 6, **characterised by** the use of an extruder, whose planetary spindles (203) in the inlet zone of the material from the material feed, at least for pressureless material feeds, are designed at least partly as transport spindles and/or
whose inner toothing (205) of the housing is truncated to form an inlet funnel in the toothing, at least in the zone that adjoins the inlet opening of the housing cover, and extends in the direction of rotation of the central spindle.

8. Process according to claim 7, **characterised by** the use of an extruder, whose inlet zone is the annular surface on the housing cover, in which the opening for the material feed lies, plus/minus with an annular surface width deviation of 50%, preferably of plus/minus 30% and even more preferably of plus/minus 10% of an annular surface width deviation.

9. Process according to claim 7 or 8, **characterised by** the use of an extruder with planetary spindles (203) that outside the zone of the truncated toothing are equipped with conventional toothing and/or transversal mixing toothing and/or back-cut toothing.

10. Process according to claim 9, **characterised by** the use of an extruder, wherein the planetary spindles (203) of the feed part equipped with a transport spindle toothing are equipped, at least at the ends, with conventional toothing.

11. Process according to one of claims 7 to 10, **characterised by** the use of an extruder,wherein the planetary spindles (203) equipped with a transport spindle toothing in the feed part are combined with differently toothed planetary spindles.

12. Process according to claim 11, **characterised by** the use of an extruder, wherein the percentage of the planetary spindles (203) with transport spindle toothing is at least 50%, preferably at least 70% of the planetary spindle finishes on the planetary roller extruder section that forms the inlet feed
and/or
the planetary spindles with transport spindle toothing are evenly distributed in the planetary spindle finishes.

13. Process according to one of claims 7 to 12, **characterised by** the use of an extruder with a tooth truncation in the inlet zone, wherein the teeth of the toothing of the housing have been truncated at most into the tooth base, preferably truncated by at most 90% of the original tooth height, even more preferably has been truncated by at most 80% of the original tooth height, wherein
the truncation decreases with increasing distance from the inlet opening.

14. Process according to one of claims 7 to 13, **characterised by** the use of an extruder, wherein the truncation in the inlet zone extends over at least one tenth, preferably over at least one fifth, even more preferably over at least ½ and most preferably over at least ¾ of the periphery of the pitch circle of the inner toothing of the housing (205).

15. Process according to one of claims 7 to 14, **characterised by** the use of an extruder, wherein
the truncated teeth are provided with tooth flanks, whose slant is less than the tooth flanks of the teeth in the un-truncated zone and/or the truncated teeth are provided with a curved top.

16. Process according to one of claims 1 to 15, **characterised by** the use of an extruder, wherein the centre axis (208) of the inlet opening intersects the pitch diameter of the inner toothing of the housing (205) as a secant or runs as a tangent to the pitch circle of the inner toothing of the housing (205) or runs at a distance from the pitch circle of the inner toothing of the housing (205), wherein the distance is at most equal to the thickness of the housing cover.

17. Process according to one of claims 1 to 16, **characterised by** the use of an extruder with an inlet opening that as a result of the offset protrudes towards the interior of the feed part and merges with a slope into the wall of the feed part, wherein the slope preferably includes an angle of up to 30°, even more preferably an angle of up to 45° and most preferably an angle of up to 60° between itself and the horizontal.

18. Process according to one of claims 1 to 17, **characterised in that** in order to facilitate the start of the devulcanisation only a partial amount of the desired throughput is initially fed into the extruder, and the added amount is increased after the devulcanisation process has stabilised.

19. Process according to claim 18, **characterised in that** the particles (206) are added stepwise through inlet openings that are spaced apart.

20. Process according to claim 1 or 19, **characterised in that** particles are fed by force by means of a crammer feeder at at least one downstream inlet opening.

21. Process according to claim 20, **characterised in that** a twin-screw extruder is used as the crammer feeder.

## Revendications

1. Procédé pour la dévulcanisation de caoutchouc réticulé et d'élastomères réticulés, dont les chaines moléculaires peuvent être détruites par des contraintes mécaniques et thermiques, excepté les molécules de carbure d'hydrogène, le matériau à dévulcaniser étant pressé en tant que particule par le biais d'une pièce de remplissage dans une extrudeuse, et déformé par échauffement aussi longtemps et intensément jusqu'à obtention d'une fragmentation souhaitée des chaines moléculaires, le traitement mécanique et thermique étant réalisé dans une extrudeuse à rouleau planétaire, l'extrudeuse à rouleau planétaire étant composée d'un carter, de broches planétaires et d'une broche centrale et la broche centrale engrenant avec les broches planétaires, et les broches planétaires engrenant avec une denture intérieure du carter ou la denture intérieure d'un connecteur prévu dans le carter, de sorte qu'une rotation de la broche centrale occasionne une mise en circulation des broches planétaires autour de la broche centrale dans le carter, les broches planétaires d'une section d'extrudeuse glissant avec une face frontale au niveau d'une bague de roulement de cette section d'extrudeuse, **caractérisé en ce qu'**il est utilisé, en tant que pièce de remplissage, un tronçon d'extrudeuse à rouleau planétaire, les particules à dévulcaniser
a) étant laissées de façon excentrique au milieu du tronçon d'extrudeuse à rouleau planétaire, entre les broches planétaires (203),
b) l'axe médian (208) de l'ouverture de remplissage de l'axe médian de la pièce de remplissage comportant un espacement.

2. Procédé selon la revendication 1, **caractérisé par** l'utilisation d'une pièce de remplissage avec une ouverture de remplissage, dont le milieu (208) de l'axe médian de la pièce de remplissage réalisée en tant que tronçon d'extrudeuse à rouleau planétaire comporte un espacement qui est au moins égal à un quart du diamètre de cercle partiel de la denture intérieure (205) du carter de l'extrudeuse (201) ou d'un connecteur à denture intérieure du carter.

3. Procédé selon la revendication 1 ou 2, **caractérisé par** l'utilisation d'une extrudeuse avec un espacement entre le milieu (208) de l'orifice d'entrée et l'axe médian du tronçon d'extrudeuse à rouleau planétaire qui est plus petit que la moitié du diamètre de cercle partiel de la denture intérieure (205) du carter de l'extrudeuse (201) ou d'un connecteur à denture interne du carter.

4. Procédé selon l'une des revendications 1 à 3, **caractérisé par** l'utilisation d'une extrudeuse avec un espacement entre le milieu (208) de l'orifice d'entrée et de l'axe médian du tronçon d'extrudeuse à rouleau planétaire qui est plus grand que le demi-diamètre de cercle de pied de la denture de la broche centrale et plus petit que le demi-cercle de pied de la denture intérieure (205) du carter de l'extrudeuse (201) ou d'un connecteur à denture intérieure du carter.

5. Procédé selon l'une des revendications 1 à 4, **caractérisé par** l'utilisation d'une extrudeuse avec une alimentation en matériau qui comporte au niveau du passage (207) vers le carter de l'extrudeuse à rouleau planétaire (201), une inclinaison si tant est que l'alimentation en matériau fait saillie par rapport au carter d'extrudeuse.

6. Procédé selon la revendication 5, **caractérisé par** l'utilisation d'une extrudeuse dont l'inclinaison au niveau de l'alimentation en matériau est à peu près sur une tangente au niveau du diamètre de cercle partiel de la denture extérieure (205) du carter (201) ou un connecteur à denture intérieure du carter, la mesure « à peu près » comprenant un écart maximal de la tangente qui est égal au diamètre des broches planétaires (203), de préférence égal au demi-diamètre des broches planétaires (203) et de manière préférée entre toutes, égal au quart du diamètre des broches planétaires (203), l'inclinaison incluant avec les horizontales à travers le centre de l'extrudeuse, un angle d'au moins 30 degrés, de préférence un angle d'au moins 45 degrés, et de manière préférée entre toutes d'au moins 60 degrés.

7. Procédé selon l'une des revendications 1 à 6, **caractérisé par** l'utilisation d'une extrudeuse, dont les broches planétaires (203) dans la zone d'entrée du matériau sont réalisées depuis l'alimentation en matériau au moins pour l'amenée de matériau sans pression, au moins en partie en tant que broches de transport et/ou dont la denture intérieure du carter (205) est aplanie pour formation d'un entonnoir d'entrée dans la denture au moins dans la zone, qui se raccorde au niveau de l'orifice d'entrée de l'enveloppe du carter, et s'étend dans le sens de circulation de la broche centrale.

8. Procédé selon la revendication 7, **caractérisé par** l'utilisation d'une extrudeuse, dont la zone d'entrée est la face de bague au niveau de l'enveloppe du carter, dans laquelle l'ouverture est pour l'amenée de matériau, plus/moins d'un écart de largeur de face de bague de 50%, de préférence de plus/moins 30% et de préférence encore de plus/moins 10% d'un écart de largeur de face de bague.

9. Procédé selon la revendication 7 ou 8, **caractérisé par** l'utilisation d'une extrudeuse avec des broches planétaires (203) qui sont prévues à l'extérieur de la zone d'aplatissement de denture avec une denture normale et/ou une denture hérisson et/ou une denture tétons.

10. Procédé selon la revendication 9, **caractérisé par** l'utilisation d'une extrudeuse, les broches planétaires (203), munies d'une denture de broche de transport, de la pièce de remplissage, étant munies au moins au niveau des extrémités d'une denture normale.

11. Procédé selon l'une des revendications 7 à 10, **caractérisé par** l'utilisation d'une extrudeuse, les broches planétaires (203), munies dans la pièce de remplissage d'une denture de broche de transport, étant combinées à des broches planétaires à denture autre.

12. Procédé selon la revendication 11, **caractérisé par** l'utilisation d'une extrudeuse, la partie des broches planétaires (203) avec une denture de broche de transport étant au moins 50 %, de préférence au moins 70 % au niveau de la garniture de broche planétaire du tronçon d'extrudeuse à rouleau planétaire formant l'amenée, et/ou, les broches planétaires étant réparties avec la denture de broches planétaires uniformément dans la garniture de broches planétaires.

13. Procédé selon l'une des revendications 7 à 12, **caractérisé par** l'utilisation d'une extrudeuse, avec un aplatissement de denture dans la zone d'entrée, les dents de la denture intérieure du carter étant aplaties au maximum jusque dans la base de la dent, de préférence aplaties d'au maximum 90 % de la hauteur de denture initiale, de préférence encore aplaties d'au maximum 80 % de la hauteur de denture initiale, l'aplatissement diminuant avec un espacement croissant de l'orifice d'entrée.

14. Procédé selon l'une des revendications 7 à 13, **caractérisé par** l'utilisation d'une extrudeuse, l'aplatissement dans la zone d'entrée s'étendant au moins sur 1/10, de préférence sur au moins 1/5, encore de préférence sur au moins ½ et de manière préférée entre toutes, sur au moins ¾ de la circonférence du cercle partiel de la denture intérieure de carter (205).

15. Procédé selon l'une des revendications 7 à 14, **caractérisé par** l'utilisation d'une extrudeuse, les dents aplaties étant munies de flancs de dent, dont l'inclinaison est plus faible que les flancs de dent des dents dans la zone non aplatie et/ou les dents aplaties étant pourvues au-dessus d'un arrondi.

16. Procédé selon l'une des revendications 1 à 15, **caractérisé par** l'utilisation d'une extrudeuse, l'axe médian (208) de l'orifice d'entrée coupant le diamètre de cercle partiel de la denture intérieure du carter (205) en tant que sécante ou passe en tant que tangente au niveau du cercle partiel de la denture intérieure du carter (205) ou passe espacé du cercle partiel de la denture intérieure du carter (205), l'espacement étant au maximum égal à l'épaisseur de l'enveloppe de carter.

17. Procédé selon l'une des revendications 1 à 16, **caractérisé par** l'utilisation d'une extrudeuse avec un orifice d'entrée qui fait saille après le décalage par rapport à l'espace intérieur de la pièce de remplissage, qui se transforme avec une inclinaison dans la paroi de la pièce de remplissage, l'inclinaison incluant de préférence un angle allant jusqu'à 30 degrés, de préférence encore un angle allant jusqu'à 45 degrés et de manière préférée entre toutes, un angle allant jusqu'à 60 degrés, entre lui et les horizontales.

18. Procédé selon l'une des revendications 1 à 17, **caractérisé en ce que**, pour faciliter l'amorçage de dévulcanisation, seule une quantité partielle du rendement souhaité n'est tout d'abord cédée dans l'extrudeuse et la quantité additionnelle est augmentée après stabilisation du processus de dévulcanisation.

19. Procédé selon la revendication 18, **caractérisé en ce que** l'ajout progressif de particules (206) s'effectue par le biais d'ouvertures de remplissage disposées espacées.

20. Procédé selon la revendication 1 ou 19, **caractérisé en ce qu'**au niveau au moins d'une ouverture de remplissage placée en aval, est effectuée une alimentation de particules forcée au moyen d'un dispositif d'alimentation forcée.

21. Procédé selon la revendication 20, **caractérisé en ce qu'**une extrudeuse à deux vis est employée en tant que dispositif d'alimentation forcée.
